(19) Europäisches Patentamt / European Patent Office / Office européen des brevets

(11) **EP 3 138 755 B1**

(12) **EUROPEAN PATENT SPECIFICATION**

(45) Date of publication and mention
of the grant of the patent:
**08.05.2019 Bulletin 2019/19**

(51) Int Cl.:
**B61L 27/00** *(2006.01)*    **B60L 15/40** *(2006.01)*
**B60L 15/32** *(2006.01)*    **B60L 15/38** *(2006.01)*

(21) Application number: **15786135.2**

(22) Date of filing: **13.03.2015**

(86) International application number:
**PCT/JP2015/057401**

(87) International publication number:
**WO 2015/166727 (05.11.2015 Gazette 2015/44)**

(54) **A TRAIN OPERATION SUPPORT SYSTEM**

SYSTEM ZUR UNTERSTÜTZUNG DES ZUGBETRIEBS

UN SYSTEME D'AIDE À L'OPERATIONS DES TRAINS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2014 JP 2014092223**

(43) Date of publication of application:
**08.03.2017 Bulletin 2017/10**

(73) Proprietor: **Hitachi, Ltd.**
**Chiyoda-ku**
**Tokyo 100-8280 (JP)**

(72) Inventors:
• **OGUMA, Kenji**
**Tokyo 100-8280 (JP)**
• **FUSHIKI, Takumi**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
JP-A- H07 232 643       JP-A- H09 104 347
JP-A- 2002 370 645      JP-A- 2011 131 636
US-A- 5 794 172         US-A1- 2012 197 466
US-A1- 2013 325 224

• DAI ARAKI ET AL.: 'Train Schedule Adjustment
Expert System based on Cooperative
Man-Machine Interaction Model' THE
TRANSACTIONS OF THE INSTITUTE OF
ELECTRICAL ENGINEERS OF JAPAN vol. 115 -C,
no. 5, 20 April 1995, pages 672 - 680, XP055360235

**Description**

Technical Field

The present invention relates to an operation support system that supports an operation of trains.

Background Art

As a background art in the field of the present technology, PTL 1 is known. In the gazette, a method of providing a limited speed created from a minimum train running time to a train is described. Using a reference running time between stations is shown in Paragraph 0022 of PTL 1 as a method of providing a limited speed created from the minimum train running time.

Showing a predicted time by creating an initial value based on train performance curve information and reflecting an actual operation delay is described in Paragraphs 0027, 0028 of PTL 2 as a method of creating a predicted train diagram in which actual operation information of trains is reflected in the train diagram. Then, providing a relationship between the position and the speed to trains as predicted pattern information is shown in Paragraph 0029 of PTL 2.

Citation List

Patent Literatures

PTL 1: JP 11-255126 A
PTL 2: JP 2010-36722 A

US patent application US2012/197466 A1 (Yoshimoto et al.) discloses an operation support device for trains on a track, wherein preceding and subsequent train postion, departure and arrival times are estimated.

Summary of Invention

Technical Problem

Trains are operated according to a train diagram created in advance and delays may be caused in an actual operation by an increased station stoppage time accompanying passengers getting on and off at stations or the like.

If a train departs from a station behind schedule, the time when a subsequent train arrives at the station can be calculated by using headway as information indicating a time interval needed between a preceding train and a subsequent train. The above running time is information determined from the relationship between the position and the speed that can be run based on the performance of a train regarding gradients and curves of a route and thus, if a time difference between an arrival time when the subsequent train arrives at the station and a time when the train departs from the preceding station is equal to or more than the running time, the subsequent train can be determined to be able to keep the calculated arrival time. However, the subsequent train when the time difference is larger than the running time needs to run at a speed lower than the train performance curve and also to arrive at the station just as specified by the running time.

Here, for the reference running time to be a reference of a train between stations, a train performance curve diagram showing an implementable running state as a relationship between the position and the speed from the performance of a train and information of gradients and curves of a route on which the train runs and the running time between stations is known to be determined from the relevant graph as the reference running time, but in PTL 1, while the reference running time between stations can be provided to a train as a limited speed, a case when running in a time slower than the reference running time is not considered at all.

PTL 2 shows a method of providing the correspondence between the position and the speed as a predicted pattern to a train. However, no consideration is given to connections between the headway and the predicted pattern. Also, using existing signal apparatuses, for example, ATS (Automatic Train Stop) and ATC (Automatic Train Control) is known as a means of enabling safe running of trains in a railroad. ATS and ATC are a method of preventing train collisions by controlling a route on which trains run as one or more blocks and exercising control so that maximally one train is present in one block. Thus, when a train runs from the next block to the next block, if the interval to the preceding train is small and the preceding train has not yet passed through the next block, the train is not permitted to enter the next block and is stopped before the boundary of the next block. Then, after permitted to enter the next block, the train continues to run by accelerating. Thus, signal apparatuses such as ATS and ATC are intended to prevent train collisions by maintaining the speed of trains at a limited speed or below.

The limited speed is determined according to the physical relationship with other trains and information of curves and gradients of a route. A train performance curve assumes that the train runs following the limited speed and thus, the minimum running time when the train runs at the upper limit of the limited speed can be determined. However, if the train runs at a speed lower than the train performance curve and the running time increases, there is no constraint other than the condition that the train speed is equal to the limited speed or below. Therefore, the train speed corresponding to the running time regarding the specified running time to be provided to the train cannot be obtained from the signal apparatus.

When the preceding train departs from a station behind schedule due to a delay or the like, the subsequent train may not be able to maintain the headway with the preceding train if the subsequent train does not run at a speed lower than the speed corresponding to the reference running time.

Here, even if a train is required to run at a speed lower than the train performance curve, the conventional technology described above cannot provide the corresponding limited speed to the train. If, in such a case, the speed corresponding to the reference running time is provided to the train as the limited speed, the train reaches the signal device prior to a block before the preceding train passes through the block in the running direction and, as a result, the train may be prohibited from entering the block by the signal device and stopped between stations.

Then, the train needs to re-accelerate for departure so that energy used may increase or the train may not be able to arrive at the station according to a specified timetable due to stoppage between stations.

An object of the present invention is to implement smooth running of a train so that the train arrives at a station according to a specified timetable even if the train runs at a speed lower than a train performance curve.

Solution to Problem

To solve the problem, the present invention includes: a storage unit that stores a schedule train diagram of trains scheduled in advance, minimum headway as a time interval needed between a preceding train and a subsequent train, and a train performance curve showing a relationship between a limited speed at which each train can run and a train position; and an operation processing unit that performs, when a delay arises in an operation of the trains, a process of determining a predicted departure time at which the subsequent train departs from a predetermined station and a predicted arrival time at which the subsequent train arrives at a next station of the predetermined station based on the schedule train diagram and the minimum headway, a process of determining a differential time between the predicted arrival time and the predicted departure time and correcting the train performance curve such that a running time becomes the differential time when the subsequent train runs following the train performance curve and a process of providing a limited speed determined from the train performance curve that has been corrected to the subsequent train.

Advantageous Effects of Invention

By adopting the above means, the present invention can implement smooth running of a train so that the train arrives at a station according to a specified timetable even if the train runs at a speed lower than a train performance curve when a delay arises in the operation of the train.

Brief Description of Drawings

FIG. 1 is a diagram illustrating an apparatus configuration of the present invention.
FIG. 2 is a diagram illustrating the configuration of a limited speed creation information creation apparatus of the present invention.
FIG. 3 is a diagram illustrating a train performance curve of the present invention.
FIG. 4 is a diagram illustrating a train performance curve according to a limited speed of the present invention.
FIG. 5 is an example of content of limited speed creation information of the present invention.
FIG. 6 is another example of content of the limited speed creation information of the present invention.
FIG. 7 is an example of content of train departure timing creation information of the present invention.
FIG. 8 is an example of a flow chart illustrating processing of a train departure timing creation apparatus of the present invention.
FIG. 9 is an example of content held in train diagram information of the present invention.
FIG. 10 is an example of content controlled by a train arrival/departure control apparatus of the present invention.
FIG. 11 is another example of content controlled by a traffic prediction apparatus of the present invention.

FIG. 12 is an example of content of the limited speed creation information when the train departure timing creation apparatus of the present invention is not included.

FIG. 13 is another example of content of the limited speed creation information when the train departure timing creation apparatus of the present invention is not included.

FIG. 14 is a diagram of the apparatus configuration when the train departure timing creation apparatus of the present invention is not included.

FIG. 15 is a diagram showing the configuration of the limited speed creation information creation apparatus when the train departure timing creation apparatus of the present invention is not included.

FIG. 16 is an example holding the correspondence between a running time and a limited speed as content of the limited speed creation information of the present invention.

FIG. 17 is another example holding the correspondence between the running time and the limited speed as content of the limited speed creation information of the present invention.

FIG. 18 is an example holding the correspondence between the running time and the limited speed as content of the limited speed creation information when the train departure timing creation apparatus of the present invention is not included.

FIG. 19 is another example holding the correspondence between the running time and the limited speed as content of the limited speed creation information when the train departure timing creation apparatus of the present invention is not included.

FIG. 20 is an example of the flow chart illustrating processing of a limited speed creation apparatus of the present invention.

FIG. 21 is a content example of the train departure timing creation information when the running time is used as the train departure timing creation information of the present invention.

FIG. 22 is an example of the flow chart illustrating processing of the train departure timing creation apparatus when the running time is used as the train departure timing creation information of the present invention.

FIG. 23 is an example showing content displayed in an information display apparatus of the present invention.

FIG. 24 is an example showing other content displayed in the information display apparatus of the present invention.

FIG. 25 is an example showing other content displayed in the information display apparatus of the present invention.

FIG. 26 is an example showing other content displayed in the information display apparatus of the present invention.

FIG. 27 is an example showing other content displayed in the information display apparatus of the present invention.

FIG. 28 is a diagram showing another configuration of the limited speed creation information creation apparatus when the train departure timing creation apparatus of the present invention is not included.

FIG. 29 is an example of the flow chart illustrating processing of the limited speed creation apparatus using the running time of the present invention.

FIG. 30 is an example showing the relationship between the maximum number of trains between stations and the number of blocks of the present invention.

FIG. 31 is another example showing the relationship between the maximum number of trains between stations and the number of blocks of the present invention.

FIG. 32 is an example in which a route is represented by a section and controlled by a section number of the present invention.

FIG. 33 is an example in which the route is represented by the section and controlled by a start position and an end position of the section of the present invention.

FIG. 34 is an example showing content of transmission information and transmission timing of the present invention.

FIG. 35 is an example showing settings of the limited speed by the transmission information of the present invention.

FIG. 36 is an example transmitting a plurality of limited speeds by the transmission information of the present invention.

Description of Embodiments

Hereinafter, embodiments will be described using the drawings.

Embodiment 1

In the present embodiment, a traffic control apparatus that provides a limited speed to a train based on traffic prediction information will be described.

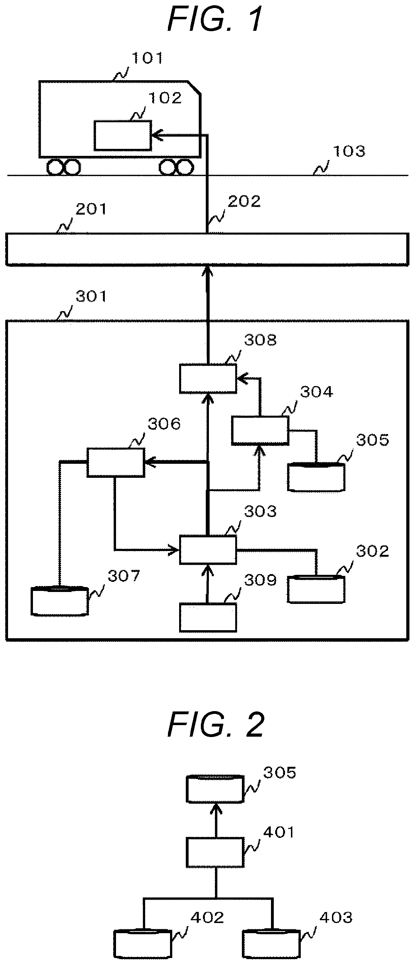

FIG. 1 is an example of a configuration diagram of the traffic control apparatus according to the present embodiment. When a train 101 runs on a route 103, transmission information 202 is received from an information transmission apparatus 201 and displayed in an information display apparatus 102.

A traffic control apparatus 301 transmits the transmission information 202 from an information transmitting apparatus 308 to the information transmission apparatus 201. The transmission information 202 is received from a traffic prediction apparatus 303 and a limited speed creation apparatus 304. The traffic prediction apparatus 303 performs processing using output of a train arrival/departure control apparatus 309, train diagram information 302, and output of a train departure timing creation apparatus 306 and outputs traffic prediction information as a result of calculation to the train departure timing creation apparatus 306, the limited speed creation apparatus 304, and the information transmitting apparatus 308. The train departure timing creation apparatus 306 processes the traffic prediction information received from the traffic prediction apparatus 303 using train departure timing creation information 307 and gives feedback about the result to the traffic prediction apparatus 303. The limited speed creation apparatus 304 processes the traffic prediction information received from the traffic prediction apparatus 303 using limited speed creation information 305 and outputs limited speed information as a result of calculation to the information transmitting apparatus 308.

Among these, the train 101 runs manually or automatically according to limited speed information displayed in the information display apparatus 102. The method of running manually or automatically is publicly known and thus, the description thereof is omitted. The information transmission apparatus 201 and the information transmitting apparatus 308 are publicly known means such as communication using, for example, wireless LAN, a public portable telephone line, or an LCX cable.

Though not depicted in FIG. 1, the train 101 is controlled by signal apparatuses. The signal apparatus is a publicly known device, for example, ATS or ATC.

Also, as a hardware configuration of the traffic control apparatus, a CPU, a memory, a nonvolatile storage medium, and a bus connecting these devices (not shown) are included. The CPU transfers a program from the nonvolatile storage medium and executes the program. As programs to be executed, an operating system (OS) and application programs running on the OS can be exemplified. The memory is a temporary storage area for the CPU to operate and stores, for example, the OS and application programs transferred from the nonvolatile storage medium. The nonvolatile storage medium is a storage medium of information and stores program to operate the OS, application programs, device drivers, and the CPU 101 and also stores execution results of programs. As the nonvolatile storage medium, a hard disk drive (HDD), a solid state drive (SSD), and a flash memory can be exemplified. An external storage medium that can easily be mounted and removed may be used as a nonvolatile storage medium 109. As such an external storage medium, for example, a flexible disk (FD), an optical disk such as CD and DVD, or a flash memory such as a USB memory and Compact Flash (registered trademark) can be used.

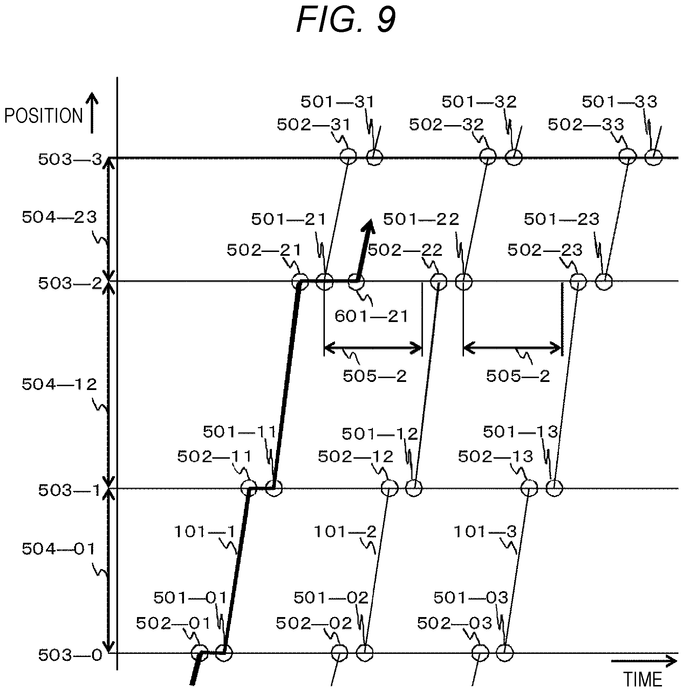

In FIG. 1, programs executed by the CPU and information stored in the nonvolatile storage medium and the memory are represented as functional block diagrams. An example of the train diagram information 302 held by the traffic control apparatus 301 is shown in FIG. 9. Here, a case in which there are at least as many as four stations 503-0 to 503-3 on the route 103 and three trains 101-1 to 101-3 run therebetween will be described. The train diagram information 302 holds time values of planned departure times 501-01 to 501-33 and planned arrival times 502-01 to 502-33 of each of the trains 101-1 to 101-3 at each of the stations 503-0 to 503-3, inter-station distances 504-01 to 504-33 between each of the stations 503-0 to 503-3, and departure/arrival headway 505-2 representing the minimum value of a time interval between the departure of a preceding train and the arrival of a subsequent train at the station 503-2 as headway. Here, it is assumed that the difference between the planned arrival time and the planned departure time at the station 503-2 of the three trains 101-1 to 101-3 exceeds the departure/arrival headway 505-2. If the train operation is such that the interval between the preceding train and the subsequent train is equal to the departure/arrival headway or less, the subsequent train reaches the signal device prior to a block before the preceding train passes through the block in the running direction and, as a result, the subsequent train may be prohibited from entering the block by the signal device and stopped between stations. The headway as information indicating the time interval needed between the preceding train and the subsequent train can be created from a train performance curve diagram.

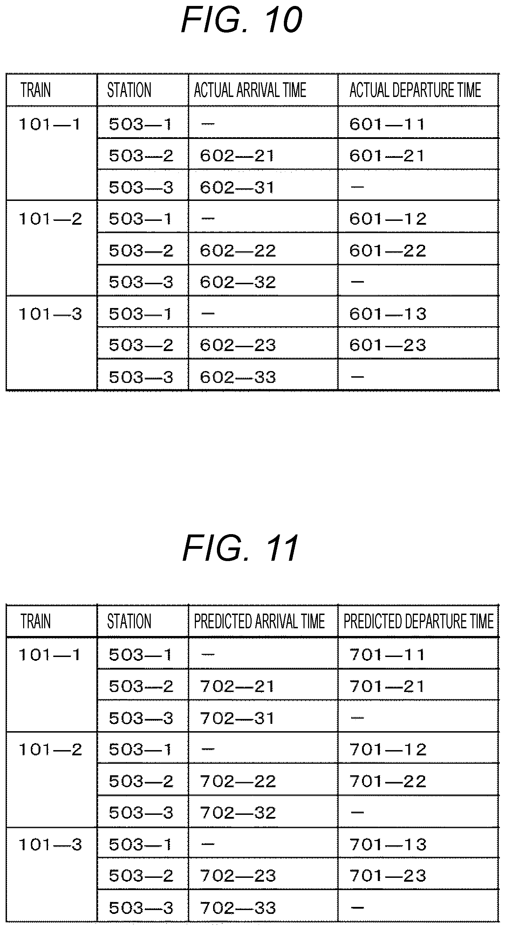

An example of arrival/departure time information of train controlled by the train arrival/departure control apparatus 309 is shown in FIG. 10. Here, actual departure times 601-01 to 601-33 as departure times in actuality and actual arrival times 602-01 to 602-33 as arrival times in actuality at each of the stations 503-0 to 503-3 are managed. The actual departure times 601-01 to 601-33 and the actual arrival times 602-01 to 602-33 are blank in the initial state and the relevant field in FIG. 10 is overwritten with the relevant time information each time the relevant train departs from or arrives at the relevant station. As the time information, for example, the clock held by the traffic control apparatus 301 is used.

The traffic prediction apparatus 303 creates traffic prediction information by reflecting the actual departure times 601-01 to 601-33 and the actual arrival times 602-01 to 602-33 as arrival/departure time information of trains controlled by the train arrival/departure control apparatus 309 shown in FIG. 10 in the train diagram information 302 shown in FIG. 9. An example of the traffic prediction information is shown in FIG. 11. Here, predicted departure times 701-11 to 701-23 as predicted departure times of each train at each station and predicted arrival times 702-01 to 702-33 as predicted arrival times are created. The predicted departure times 701-01 to 701-33 and the predicted arrival times 702-01 to 702-33 are equal to the planned departure times 501-01 to 501-33 and planned arrival times 502-01 to 502-33 in the initial state and are made blank when the actual departure times 601-01 to 601-33 and the actual arrival times 602-01 to 602-33 that are relevant are overwritten with times. Traffic prediction information is created at least each time the actual departure times 601-01 to 601-33 or the actual arrival times 602-01 to 602-33 shown in FIG. 10 are overwritten.

Here, a case in which the actual departure time 601-21 as a time when the train 101-1 actually departs from the station 503-2 shown in FIG. 10 is later than the planned departure time 501-21 held by the train diagram information 302 by a time width dt will be described. It is assumed here that the actual departure time 601-21 is a time earlier than the planned departure time 501-12 of the train 101-2 from the station 503-1.

The delay time width dt of the actual departure time 601-21 relative to the planned departure time 501-21 is determined at the actual departure time 601-21, but may also be determined before the actual departure time 601-21 as, for example, a predicted value based on experience of an operator or statistics.

First, the time width dt can be calculated by Formula (1) below:

$$dt = 601\text{-}21 - 501\text{-}21 \quad \ldots \quad \text{Formula (1)}$$

The train 101-1 is the time width dt later at the station 503-2 and thus, the predicted arrival time 702-31 at the station 503-3 can be calculated from the planned arrival time 502-31 by Formula (2) below:

$$702\text{-}31 = 502\text{-}31 + dt \quad \ldots \quad \text{Formula (2)}$$

The planned departure time 501-12 is applied unchanged to the predicted departure time 701-12 of the train 101-2 from the station 503-1. Accordingly, 701-12 is given by Formula (3) below:

$$701\text{-}12 = 501\text{-}12 \quad \ldots \quad \text{Formula (3)}$$

For the predicted arrival time 702-22 of the train 101-2 at the station 503-2, with the difference between the planned arrival time and the planned departure time of each train exceeding the departure/arrival headway 505-2, the time value of larger of the planned arrival time of the train 101-2 and the time obtained by adding the departure/arrival headway 505-2 to the actual departure time of the train 101-1 as a preceding train from the station 503-2 becomes a settable time. Accordingly, 702-22 can be calculated by Formula (4) below:

$$702\text{-}22 = \text{MAX}(502\text{-}22, \ 601\text{-}21 + 505\text{-}2) = \text{MAX}(502\text{-}22,$$

$$501\text{-}21 + dt + 505\text{-}2) \quad \ldots \quad \text{Formula (4)}$$

Predicted times after the predicted departure time 701-22 of the train 101-2 from the station 503-2 can be determined by similar calculations. By repeating the above procedure, the traffic prediction apparatus 303 creates traffic prediction information. Thus, the arrival time of each train can be calculated using the departure time and departure/arrival headway of a preceding train.

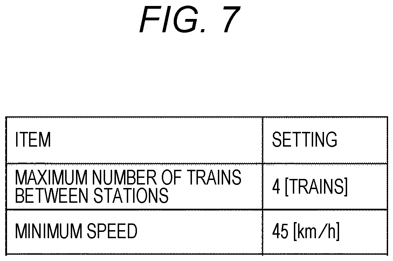

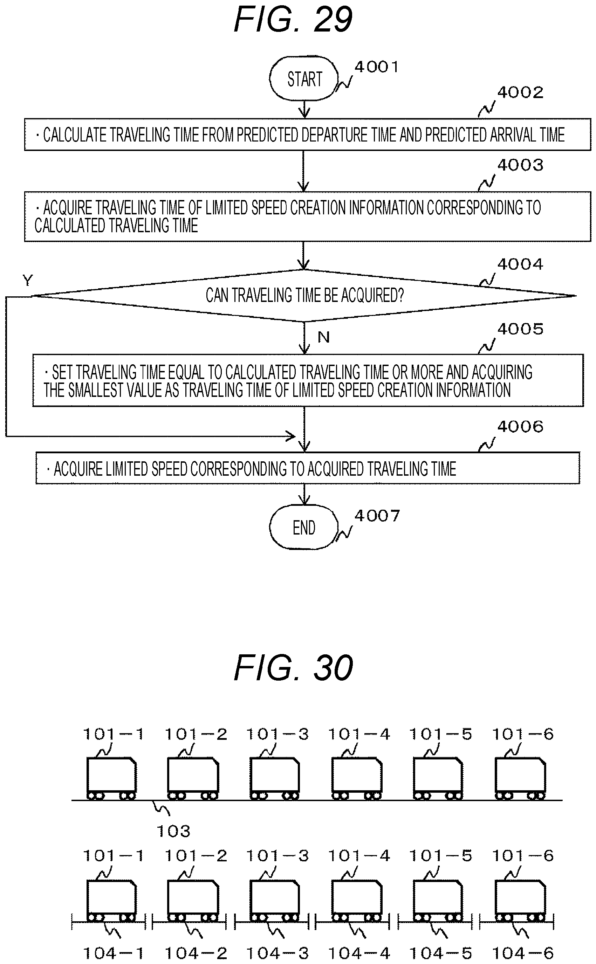

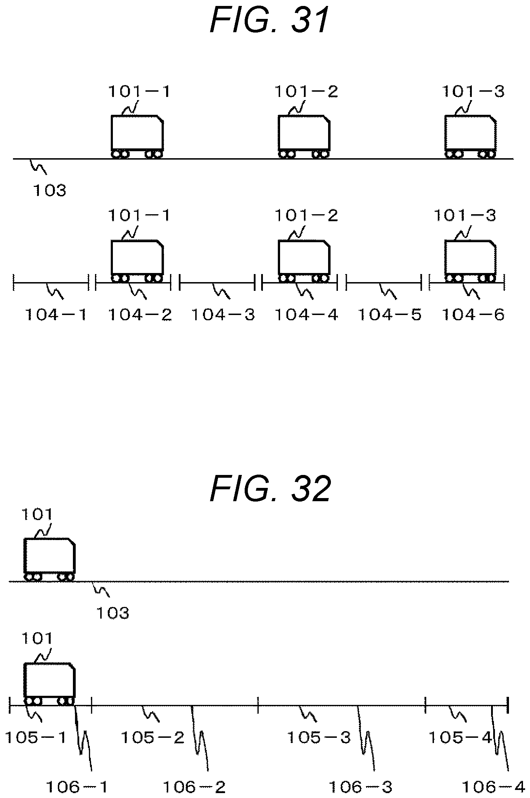

The train departure timing creation apparatus 306 creates departure timing of a train by using the train departure timing creation information 307 for traffic prediction information created by the traffic prediction apparatus 303. An example of the train departure timing creation information 307 is shown in FIG. 7. Here, information of four trains as the maximum value of the number of trains between stations and 45 km/h as the minimum speed is held. The maximum value of the number of trains between stations is determined by control content of publicly known ATS or ATC and the number of blocks. An example in which, for example, trains can be present in all blocks between stations at the same time by control of a signal apparatus is shown in FIG. 30. If blocks 104-1 to 104-6 are present on the route 103 and trains can be present in all the blocks 104-1 to 104-6 at the same time, maximally trains 101-1 to 101-6 are present on the route and thus, the maximum value of the number of trains between stations is equal to the number of blocks. An example in which trains can be present in every second block between stations at the same time by control of a signal apparatus is shown in FIG. 31. If the blocks 104-1 to 104-6 are present on the route 103 and trains can be present in every second block of the blocks 104-1 to 104-6 at the same time, maximally the trains 101-1 to 101-3 are present on the route and thus, the maximum value of the number of trains between stations is equal to half the number of blocks.

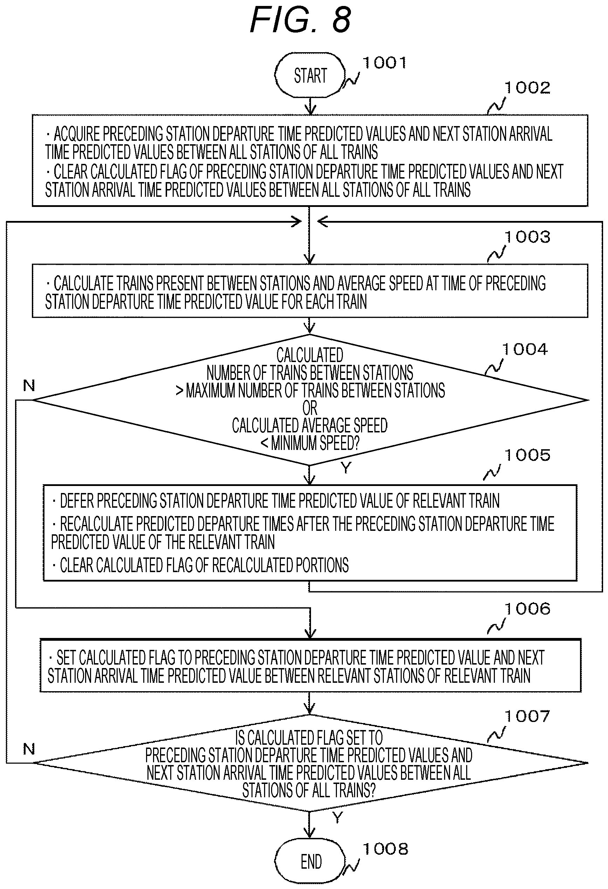

A processing flow of the train departure timing creation apparatus 306 is shown in FIG. 8. Processing is started with process 1001, predicted departure times 701-11 to 701-23 and predicted arrival times 702-21 to 702-33 between each station of all trains are acquired in process 1002, and in process 1003, the number of trains between stations and the average speed between stations are determined at the predicted departure times 701-11 to 701-23 at the preceding station between each station of each train.

If the actual departure time 601-21 is later than the planned departure time 501-21 held by the train diagram information 302 by the time width dt, the actual departure time 601-21 is a time earlier than the planned departure time 501-12 of the train 101-2 from the station 503-1 and thus, the numbers of trains between stations including the planned departure time 501-12 are all 0. The average speed V between stations can be calculated by Formula (5) below from inter-station distances 504-12 to 504-23, predicted departure times 701-11 to 701-23, and predicted arrival times 702-21 to 702-33.

$$V = \text{running time/inter-station distance} = (\text{predicted arrival time of next station-predicted departure time of preceding station)/inter-station distance} \quad \dots \text{Formula (5)}$$

Accordingly, an average speed V212 of the train 101-2 between the station 503-1 and the station 503-2 can be calculated by Formula (6) below:

$$V212 = (702\text{-}22 - 701\text{-}12)/504\text{-}12 \quad \dots \text{Formula (6)}$$

It is assumed here that the calculation result of the average speed V212 of the train 101-2 between the station 503-1 and the station 503-2 is 40 km/h.

Next, in process 1004, whether the calculated number of trains present between stations is larger than the maximum number of trains between stations or whether the calculated average speed V is lower than the minimum speed is determined. While the maximum value of the number of trains between stations is four and the minimum speed is 45 km/h from FIG. 7, the calculated number of trains present between stations is 0 and the average speed V212 is 40 km/h and so the condition of process 1004 is satisfied.

If the condition of process 1004 is satisfied, the preceding station departure time predicted value of the relevant train is deferred in process 1005. Then, predicted departure times after the preceding station departure time predicted value of the relevant train are recalculated and calculated flags of recalculated portions are cleared.

Here, to make the average speed V212 equal to 45 km/h, the predicted departure time 701-12 from the preceding station is deferred by a time width dt2. Accordingly, 701-12 can be calculated by Formula (7) below:

$$701\text{-}12 = 701\text{-}12 + dt2 = 501\text{-}12 + dt2 \quad \dots \text{Formula (7)}$$

Accordingly, the average speed V212 satisfies the minimum speed 45 km/h and thus, the average speed is recalculated by returning to process 1003 and the condition of process 1004 is determined to be not satisfied and so process 1006 is entered. In process 1006, a flag to manage a calculated relevant portion is set. Then, in process 1007, similar processing is performed for all trains between all stations and if calculated for all, the processing is finished in process 1008.

As a result of the processing, it is verified that the traffic prediction information is equal to the maximum number of trains between stations shown in the train departure timing creation information 307 or less and the average speed is equal to the minimum speed or more. Based on the traffic prediction information, the limited speed creation apparatus 304 creates limited speed information provided to the train 101 using the limited speed creation information 305.

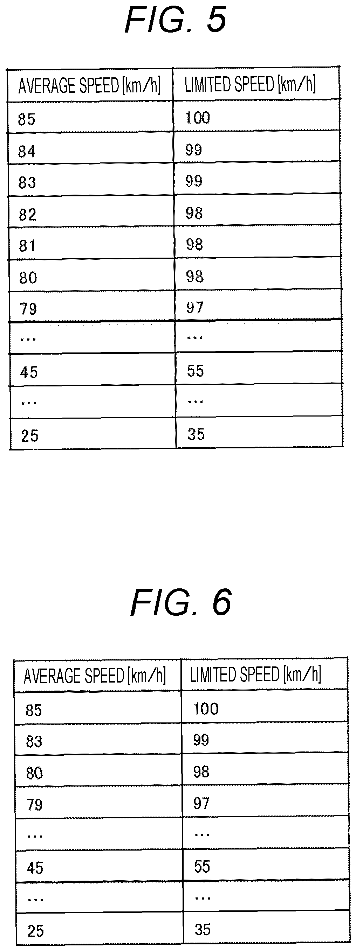

A content example of the limited speed creation information 305 is shown in FIG. 5. The traffic prediction information has the predicted departure times 701-11 to 701-23, the predicted arrival times 702-21 to 702-33, and the inter-station distances 504-12 to 504-23 and thus, the average speed V can be calculated by Formula (5). In contrast, the train runs by following the limited speed and thus, the limited speed creation information 305 has a correspondence table between the average speed and the limited speed.

A configuration example of a limited speed creation information creation apparatus 401 that creates the limited speed creation information 305 is shown in FIG. 2. The limited speed creation information creation apparatus 401 creates the limited speed creation information 305 using train performance information 402 and route information 403.

The train performance information 402 has information, for example, acceleration performance and deceleration performance of trains, maximum speeds, and running resistance in accordance with the tunnel shape.

The route information 403 has information, for example, gradients and curvatures of routes, tunnel shapes, and sections.

A train performance curve diagram can be created from content of the train performance information 402 and content of the route information 403.

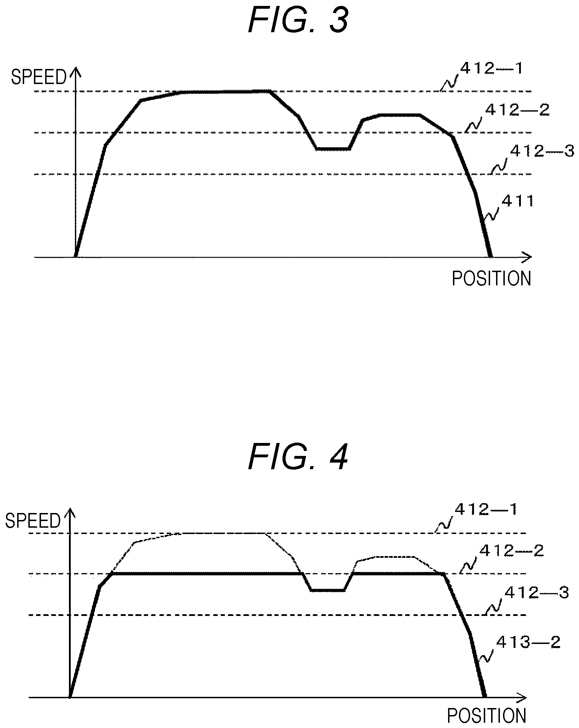

The limited speed creation information creation apparatus 401 sets a limited speed using the train performance information 402 and the route information 403 to create a train performance curve diagram in accordance with the limited speed. An example thereof is shown in FIG. 3. In addition to the method of creating a train performance curve 411 described above, train performance curves following limited speeds 412-1 to 412-3 are created. For example, a train performance curve 413-2 following the limited speed 412-2 is shown in FIG. 4. By creating the train performance curve 413-2 following the limited speed 412-2, a running time when running by following the limited speed 412-2 can be obtained. By performing similar procedures for all limited speeds, running times corresponding to the limited speeds can be obtained. The average speed can be calculated from the running time by using Formula (5). By determining the average speed corresponding to each of the limited speeds 412-1 to 412-3, a change of the value of the limited speed corresponding to a change of the average speed can be determined and thus, a limited speed corresponding to any average speed can be calculated. By repeating the above procedure, the limited speed creation information creation apparatus 401 shown in FIG. 2 can create the limited speed creation information 305 in FIG. 5 as correspondence information between the average speed and the limited speed.

The limited speed creation apparatus 304 uses the limited speed creation information 305 in FIG. 5 that has been created to create a limited speed as the transmission information 202 provided to the train 101. In the case of Formula (7) in which, for example, the average speed V212 of the train 101-2 between the station 503-1 and the station 503-2 is 45 km/h, the limited speed corresponding to the average speed 45 km/h is 55 km/h from FIG. 5 and thus, the limited speed 55 km/h is transmitted as the transmission information 202 for the train 101 via the information transmitting apparatus 308 and the information transmission apparatus 201.

A content example of the transmission information 202 is shown below. From FIG. 1, the transmission information 202 has the limited speed and the traffic prediction information created by the traffic prediction apparatus 303 as input. From FIG. 11, the traffic prediction information has the predicted departure time and the predicted arrival time for each station and each train. Accordingly, the limited speed, a starting point and an end point of the limited speed range, the station as the starting point of the limited speed range and the predicted departure time from the relevant station, and the station as the end point of the limited speed range and the predicted arrival time at the relevant station are intended for the transmission information 202. Of these, the station on the opposite side in the running direction of the train from the starting point of the limited speed range, the predicted departure time from the relevant station, the station on the side in the running direction of the train from the end point of the limited speed range, and the predicted arrival time at the relevant station are called departure timing information.

From the above, as the transmission information 202 provided to the train 101-2, the train number of the train 101 as an intended train, the limited speed 55 km/h, the station 503-1 to be the starting point of the limited speed as the set range of the limited speed and the station 503-2 to be the end point of the limited speed, the station name of the station 503-1 on the opposite side in the running direction of the train from the starting point of the limited speed range and the predicted departure time having the predicted departure time 701-12 as departure timing information, and the station name of the station 503-2 on the side in the running direction of the train from the end point of the limited speed range and the predicted arrival time having the predicted arrival time 702-22 are transmitted. This is shown in Formula (8):

```
        Transmission information 202 = "train number",

"limited speed", "starting point station of limited speed",

"end point station of limited speed", "departure timing information"

        = "train number", "limited speed", "starting point station of limited speed", "end point station of limited speed", "departure station name", "predicted departure time", "arrival station name", "predicted arrival time"

        = "train number of train 101-2", "limited speed 55 km/h", "start station 503-1 of limited speed", "end station 503-2 of limited speed", "station name of station 503-1",

"predicted departure time 701-12", "station name of station 503-2", "predicted arrival time 702-22" ... Formula (8)
```

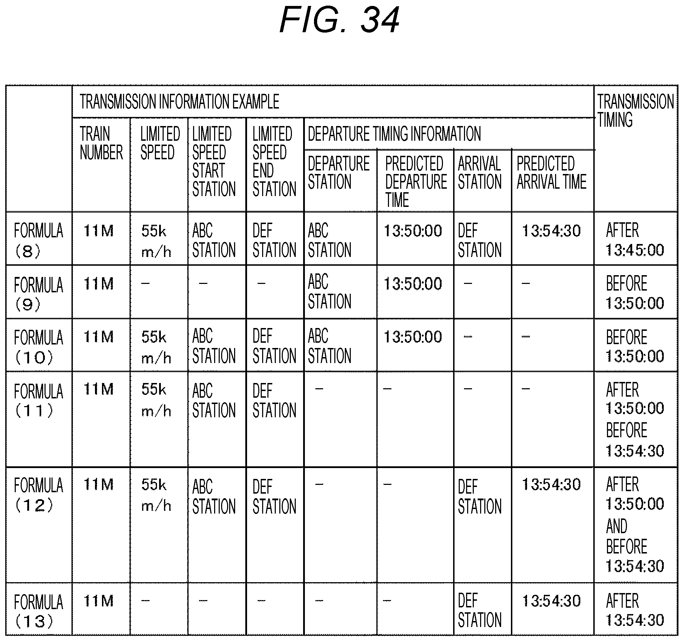

The transmission information 202 in Formula (8) is output after the actual departure time 601-21 is detected. The actual departure time 601-21 is assumed to be a time earlier than the planned departure time 501-12 of the train 101-2 from the station 503-1 and thus, the train 101-2 receives information of the limited speed 55 km/h between the stations 503-1, 503-2, the limited speed start station 503-1, the limited speed hunting station 503-2, the predicted departure time 701-12, and the predicted arrival time 702-22 before departing from the station 503-1. Accordingly, the train 101-2 can depart from the station 503-1 at the predicted departure time 701-12, run between the stations 503-1, 503-2 following the limited speed, and arrive at the station 503-2 at the predicted arrival time 702-22. A transmission content example when the train number of the train 101-2 is 11M, the limited speed is 55 km/h, the station to be the starting point of the limited speed range is the ABC station, the station to be the end point of the limited speed range is the DEF station, the predicted departure time from the ABC station on the opposite side in the running direction of the train from the starting point of the limited speed range is 13:50:00, the predicted arrival time at the DEF station on the side in the running direction of the train from the end point of the limited speed range is 15:54:30, and the actual departure time 601-21 is 13:45:00 as the transmission information 202 in Formula (8) and transmission timing are shown in FIG. 34.

Regarding Formula (8), information to be transmitted as the transmission information 202 may be all content of Formula (8) or a portion thereof. For example, at a time before the predicted departure time 701-12, the train has not yet departed and thus, the transmission information 202 may be the predicted departure time only, or the predicted departure time and the limited speed only, or the limited speed only. At a time after the predicted departure time 701-12 and before the predicted arrival time 702-22, the train is running and thus, the transmission information 202 may be the limited speed only or the limited speed and the predicted arrival time only. At a time after predicted arrival time 702-22, the transmission information 202 may be the predicted arrival time only. These are shown in Formulae (9) to (13):

```
        Transmission information 202 = "train number",

"departure station", "predicted departure time"        ...

Formula (9)
```

$$\text{Transmission information } 202 = \text{"train number"},$$
$$\text{"limited speed", "limited speed start station", "limited}$$
$$\text{speed end station", "departure station", "predicted}$$
$$\text{departure time"} \quad \ldots \quad \text{Formula (10)}$$

$$\text{Transmission information } 202 = \text{"train number"},$$
$$\text{"limited speed", "limited speed start station", "limited}$$
$$\text{speed end station"} \quad \ldots \quad \text{Formula (11)}$$

$$\text{Transmission information } 202 = \text{"train number"},$$
$$\text{"limited speed", "limited speed start station", "limited}$$
$$\text{speed end station", "arrival station", "predicted arrival}$$
$$\text{time"} \ldots \quad \text{Formula (12)}$$

$$\text{Transmission information } 202 = \text{"train number"},$$
$$\text{"arrival station", "predicted arrival time"} \quad \ldots \quad \text{Formula}$$
$$\text{(13)}$$

Transmission content examples and transmission timing for Formulae (9) to (13) are shown in FIG. 34. In FIG. 34, for example, the limited speed in Formula (9) is unnecessary information and thus, the information may be transmitted as a blank in the transmission information 202 or the column for the relevant portion may be omitted for transmission.

The content of the transmission information 202 in Formulae (8) to (13) shown in FIG. 34 may be transmitted once or a prescribed number of times when conditions of transmission timing are satisfied in the time range of transmission timing in FIG. 34. Like periodic transmission of, for example, an ATC apparatus as a publicly known operation, the same information may be transmitted at regular intervals and when the information changes, changed information may similarly be transmitted. In this case, the content of Formula (10) shown in FIG. 34 may be transmitted, for example, at intervals of one second before 13:50:00, the content of Formula (12) may be transmitted similarly at intervals of one second after 13:50:00 until 13:54:30, and the content of Formula (13) may be transmitted similarly at intervals of one second after 13:54:30.

As conditions for providing the limited speed, instead of the limited speed start station and the limited speed end station shown in Formulae (10) to (12), the start position and the end position may be provided individually to each train for each section individually for each train or the start position and the end position may be provided for each pair of stations without limiting the train, each section without limiting the train, or without limiting the train. An example in which the route 103 shown in FIG. 1 is represented by sections 105-1 to 105-4 and managed by sections numbers 106-1 to 106-4 respectively is shown in FIG. 32.

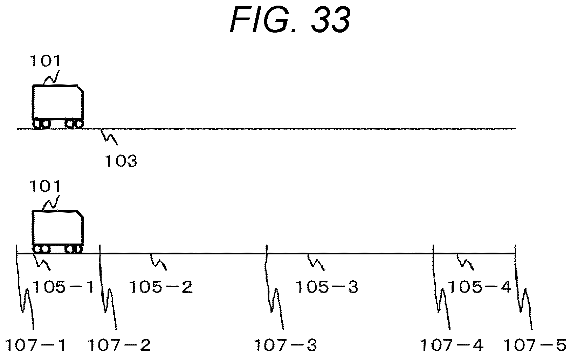

An example in which the route 103 shown in FIG. 1 is represented by the sections 105-1 to 105-4 and respective boundaries are managed by positions 107-1 to 107-5 is shown in FIG. 33. The positions 107-1 to 107-5 have distances from, for example, the reference position of the route 103. Here, the pair of stations may be the start station and the end station representing one or more consecutive pairs of stations. The section may be specified by the section number specified in advance or by the start position and the end position of the relevant section. Cases in which the train number, the limited speed, the limited speed start station, and the limited speed end station are transmitted as the transmission information 202 shown in the above Formula (11) are shown in Formulae (14) to (18).

This also applies to Formula (10) and Formula (12).

Transmission information 202 = "train number",
"limited speed", "limited speed section number"    ... Formula (14)

Transmission information 202 = "train number",
"limited speed", "limited speed start position", "limited speed end position"    ... Formula (15)

Transmission information 202 = "all-train common flag", "limited speed", "limited speed start station", "limited speed end station"  ... Formula (16)

Transmission information 202 = "all-train common flag", "limited speed", "limited speed section number"  ... Formula (17)

Transmission information 202 = "all-train common flag", "limited speed", "limited speed start position", "limited speed end position" ... Formula (18)

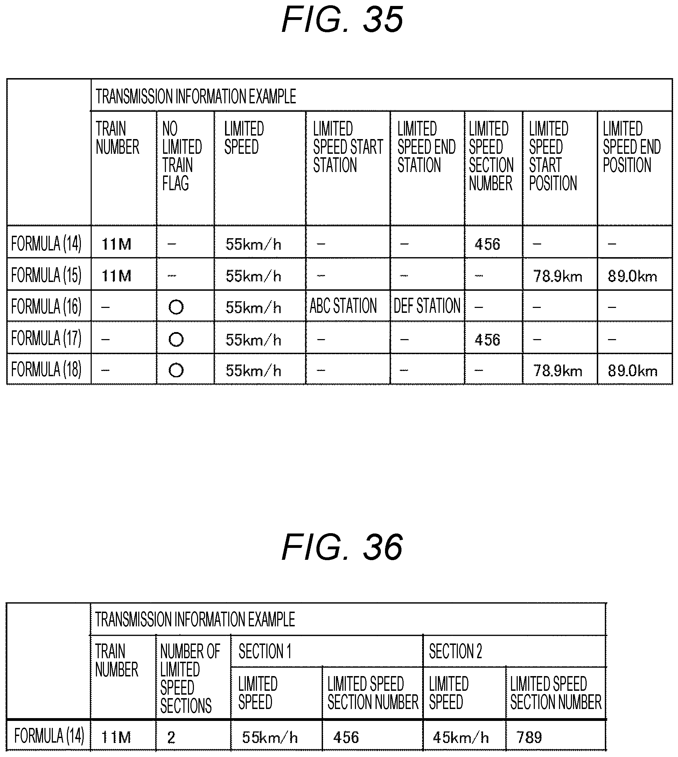

A transmission content example when 456 is transmitted as the section 106-3 individually for each train without limiting the train and also 78.9 km is transmitted as the start position 107-3 and 89.0 km is transmitted as the end position 107-5 individually for each train without limiting the train for Formulae (14) to (18) is shown in FIG. 35.

In the above Formulae (8) to (18), a case in which one limited speed and one setting range are provided in the transmission information 202 is shown, but when a plurality of limited speeds and setting ranges are provided for one piece of the transmission information 202, the number of sets of limited speeds and corresponding setting ranges and a plurality of sets of limited speeds and corresponding setting ranges may be held. An example when, for example, two sets of limited speeds and corresponding setting ranges are provided for Formula (14) is shown in FIG. 36.

Another example of content of the limited speed shown in Formulae (8), (10) to (12), (14) to (18) is shown below. Instead of the limited speed created according to the above procedure as the limited speed, a value obtained by subtracting the maximum speed between stations intended for the limited speed from the limited speed or a value obtained by subtracting the maximum speed of the section intended for the limited speed from the limited speed may be transmitted. When the train number, the limited speed, the limited speed start station, and the limited speed end station are transmitted as the transmission information 202 shown in the above Formula (11), cases in which the train number is 11M, the limited speed is 55 km/h, the maximum speed between stations is 100 km/h, the maximum speed of the section is 90 km/h, the limited speed start station is the ABC station, and the limited speed end station is the DEF station are shown in Formulae (19), (20).

Transmission information 202 = "train number",

"limited speed - maximum speed between stations", "limited speed start station", "limited speed end station"

= "11M", "-45 km/h", "ABC station", "DEF station"

... Formula (19)

Transmission information 202 = "train number",

"limited speed - maximum speed of section", "limited speed start station", "limited speed end station"

= "11M", "-40 km/h", "ABC station", "DEF station"

... Formula (20)

Another example of content of the predicted departure time shown in Formulae (8) to (10) is shown below. As the predicted departure time, the predicted departure time 701-12 reflecting the deferred time width dt2 shown in Formula (7) may be transmitted or the deferred time width dt2 shown in Formula (7) and the predicted departure time 701-12 in Formula (3) before reflecting the deferred time width dt2 may be transmitted. Also, only the deferred time width dt2 may be transmitted or a time difference between the predicted departure time 701-12 reflecting the deferred time width dt2 shown in Formula (7) and the planned departure time 501-12 may be transmitted. When the train number, the departure station, and the predicted departure time are transmitted as the transmission information 202 shown in the above Formula (9), cases in which the train number is 11M, the departure station is the ABC station, the predicted departure time 701-12 in Formula (7) is 13:52:30, the deferred time width dt2 is 00:02:30, the predicted departure time 701-12 in Formula (3) is 13:50:00, and the planned departure time 501-12 is 13:50:00 are shown in Formulae (21) to (24).

Transmission information 202 = "train number",

"departure station", "predicted departure time 701-12 in

Formula (7)"

= "11M", "ABC station", "13:52:30" ... Formula (21)

Transmission information 202 = "train number", "departure station", "deferred time width dt2", "predicted departure

time 701-12 in Formula (3)"

= "11M", "ABC station", "00:02:30", "13:50:00" ...

Formula (22)

Transmission information 202 = "train number", "departure station", "deferred time width dt2"

= "11M", "ABC station", "00:02:30" ... Formula (23)

Transmission information 202 = "train number", "departure station", "predicted departure time 701-12 in Formula (7) -

planned departure time 501-12"

= "11M", "ABC station", "00:02:30" ... Formula (24)

Another example of content of the predicted arrival time shown in Formulae (8), (12), (13) is shown below. As the predicted arrival time, a time difference between the predicted arrival time 702-22 and the planned arrival time 502-22 may be transmitted.

When the train number, the arrival station, and the predicted arrival time are transmitted as the transmission information 202 shown in the above Formula (13), a case in which the train number is 11M, the arrival station is the DEF station, the predicted arrival time 702-22 is 15:54:30, and the planned arrival time 502-22 is 15:53:30 are shown in Formula (25).

Transmission information 202 = "train number",

"arrival station", "predicted arrival time 702-22 - planned arrival time 502-22"

= "11M", "DEF station", "00:01:00" ... Formula (25)

The train 101 displays the limited speed 55 km/h contained in the transmission information 202 that has been received in the information display apparatus 102 and runs following the limited speed.

The running of the train 101 following the limited speed is information created by the limited speed creation apparatus 304 based on traffic prediction information. Because it is verified that the traffic prediction information is equal to the maximum number of trains between stations shown in the train departure timing creation information 307 or less and the average speed is equal to the minimum speed or more, the number of trains between stations is equal to the maximum number of trains between stations or less and the average speed is equal to the minimum speed or more in the running of the train 101 following the limited speed.

Information displayed in the information display apparatus 102 via the information transmission apparatus 201 will be described. A display means is a publicly known apparatus that represents received information, for example, through the display in a display apparatus or voice guidance using a speaker.

The information display apparatus 102 receives, as information contained in the transmission information 202, limited speed information created by the limited speed creation apparatus 304 and the predicted departure time and the predicted arrival time as traffic prediction information created by the traffic prediction apparatus 303 and so can display the limited speed information, the predicted departure time, and the predicted arrival time.

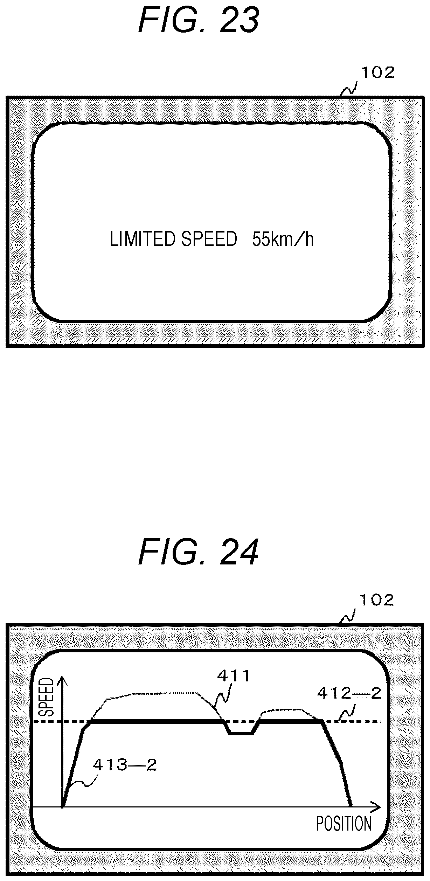

As an example of the display, a case in which the limited speed is displayed in a display apparatus is shown in FIG. 23. In FIG. 23, the limited speed is displayed in the train before the departure and during running by, for example, displaying till the time indicated by the received predicted arrival time.

As another example, a case in which limited speed information is displayed as a figure is shown in FIG. 24. The content to be displayed is, for example, the train performance curve 413-2 following the limited speed 412-2 shown in FIG. 4. The information transmission apparatus 201 illustrates running following the limited speed by holding content of the train performance curve 411 and displaying a range inside the area of the train performance curve 411 and in which the speed is lower than the limited speed 412-2.

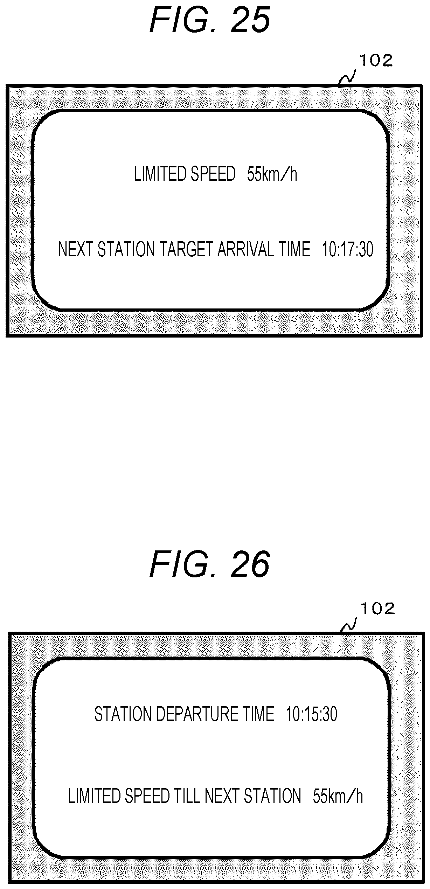

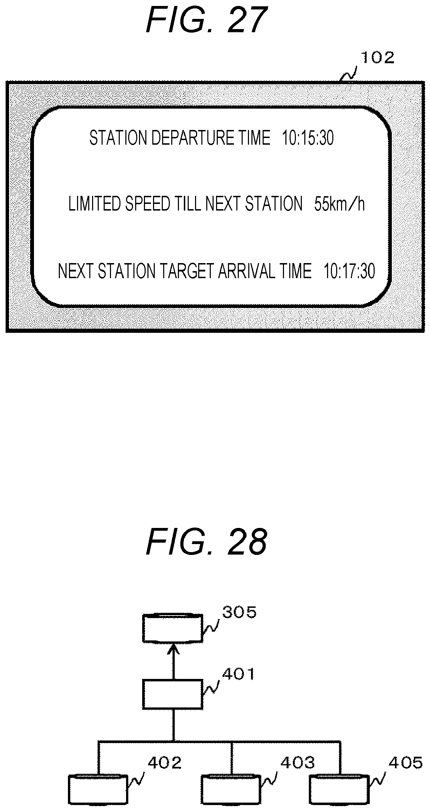

As another example, a case in which the limited speed and the predicted arrival time are displayed in a display apparatus is shown in FIG. 25. In FIG. 25, the limited speed information and the predicted arrival time are displayed in the train during running by displaying, for example, at a time after the received predicted departure time and before the received predicted arrival time. As another example, a case in which the station departure time and the limited speed are displayed in a display apparatus is shown in FIG. 26. In FIG. 26, the departure time and the limited speed are displayed in the train before the departure by displaying, for example, till a time indicated by the received predicted departure time. As another example, a case in which the station departure time, the limited speed, and the station arrival time are displayed in a display apparatus is shown in FIG. 27. In FIG. 27, the departure time, the limited speed, and the arrival time are displayed in the train before the departure by displaying, for example, till a time indicated by the received predicted departure time.

In the display in FIGS. 23 to 27, all information may be displayed at a time or each piece of information may be switched and displayed. Also, for each piece of information, the information name such as "limited speed" and the information content such as "55 km/h" may be displayed simultaneously or the information name and the information content may be switched and displayed at regular intervals.

Accordingly, the traffic control apparatus 301 enables the operation of the train 101 such that the train departs and arrives following the predicted departure time and the predicted arrival time of the traffic prediction information, the number of trains between stations is equal to the maximum number or less, and the average speed is equal to the minimum speed or more.

Energy is consumed for acceleration when departing from a station in normal running and a function to regenerate a portion of energy during deceleration for a station stop is provided. If the stop of a train occurs between stations, the train accelerates after the station departure, decelerates due to the stop, reaccelerates from the stop, and decelerates for the station stop, leading to near doubling of consumed energy. If, for example, the present system is applied when all trains stop once on average between stations to avoid all stops between stations, total consumed energy can be reduced approximately by half. Also, by avoiding stops between stations by the present system, the frequency of change of acceleration/deceleration arising in the train during running can be minimized. Accordingly, the riding comfort can be improved.

Embodiment 2

In the present embodiment, as a method of providing a limited speed to the train based on traffic prediction information, a traffic control apparatus having no train departure timing creation information and no train departure timing creation will be described.

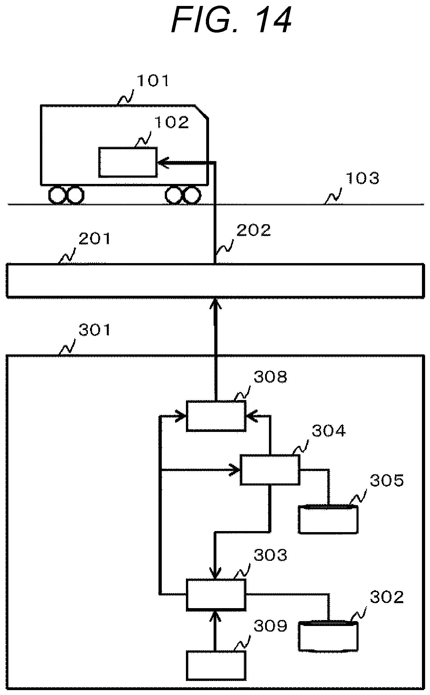

The apparatus configuration is shown in FIG. 14.

When a train 101 runs on a route 103, transmission information 202 is received from an information transmission apparatus 201 and displayed in an information display apparatus 102.

The traffic control apparatus 301 transmits the transmission information 202 from the information transmitting apparatus 308 to the information transmission apparatus 201. The transmission information 202 is received from the traffic prediction apparatus 303 and the limited speed creation apparatus 304. The traffic prediction apparatus 303 performs processing using output of the train arrival/departure control apparatus 309, the train diagram information 302, and output of the limited speed creation apparatus 304 and outputs traffic prediction information as a result of calculation to the limited speed creation apparatus 304 and the information transmitting apparatus 308. The limited speed creation apparatus 304 processes the traffic prediction information received from the traffic prediction apparatus 303 using the limited speed creation information 305, outputs, among calculation results, limited speed information to the information transmitting apparatus 308, and gives feedback of the traffic prediction information to the traffic prediction apparatus 303.

Of these, the train 1Q1, the information display apparatus 102, the information transmission apparatus 201, the train diagram information 302, the traffic prediction apparatus 303, the information transmitting apparatus 308, and the train arrival/departure control apparatus 309 are the same as in Embodiment 1.

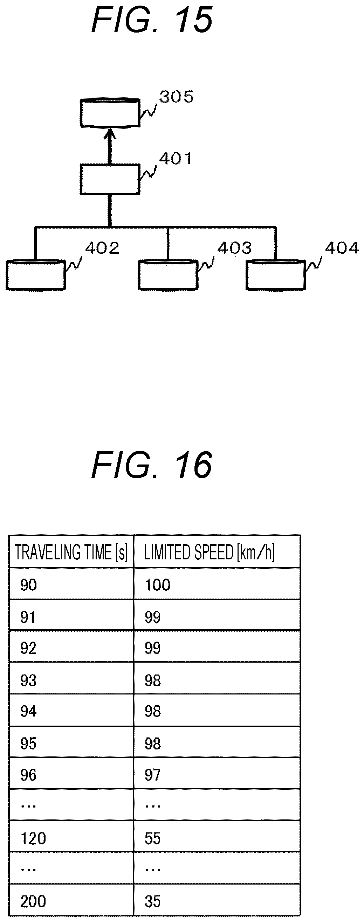

A configuration example of the limited speed creation information creation apparatus 401 that creates the limited speed creation information 305 used by the limited speed creation apparatus 304 is shown in FIG. 15. The limited speed creation information creation apparatus 401 creates the limited speed creation information 305 using the train performance information 402, the route information 403, and limited speed minimum speed information 404. Of the above information, the train performance information 402 and the route information 403 are the same as in Embodiment 1.

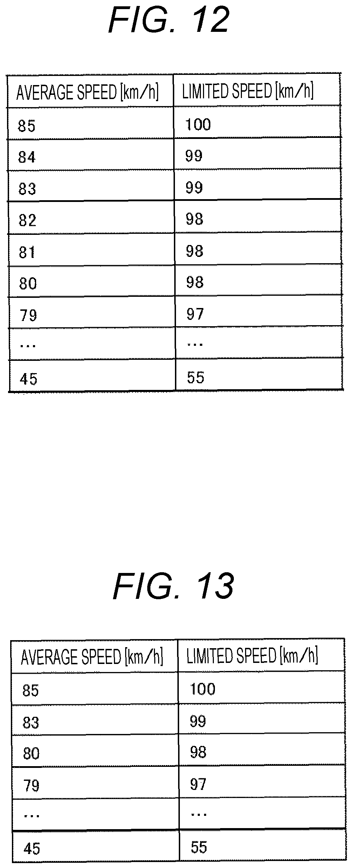

The limited speed creation information creation apparatus 401 sets a limited speed using the train performance information 402 and the route information 403 to create a train performance curve diagram in accordance with the limited speed higher than the limited speed minimum speed information 404. The limited speed minimum speed information 404 has, for example, information of 55 km/h. Using the limited speed minimum speed information 404, the limited speed creation information creation apparatus 401 calculates the average speed for a limited speed higher than the value of the limited speed minimum speed information 404 by the same procedure as used for Embodiment 1 shown in FIGS. 3 and 4 and holds the correspondence between the average speed and the limited speed in the limited speed creation information 305. An example of the limited speed creation information 305 is shown in FIG. 12. Because the limited speed minimum speed information 404 is 55 km/h, the limited speed creation information 305 that has been created does not have information of a limited speed lower than the limited speed 55 km/h.

The limited speed creation apparatus 304 uses the limited speed creation information 305 in FIG. 12 that has been created to create a limited speed to be provided to the train 101. In the case of Formula (7) in which, for example, the average speed V212 of the train 101-2 between the station 503-1 and the station 503-2 is 45 km/h, the limited speed corresponding to the average speed 45 km/h is 55 km/h from FIG. 5 and thus, 55 km/h is transmitted as the limited speed to the train 101 via the information transmitting apparatus 308 and the information transmission apparatus 201.

The processing by the train 101 having received the limited speed 55 km/h and thereafter is the same as in Embodiment 1.

A case in which a limited speed corresponding to an average speed lower than the limited speed minimum speed information 404 is determined by the limited speed creation apparatus 304 will be described. If, for example, the average speed V212 of the train 101-2 between the station 503-1 and the station 503-2 is 40 km/h, there is no value corresponding to the average speed of the limited speed creation information 305 in FIG. 12 and thus, the limited speed creation apparatus 304 recalculates the predicted station departure time using, among average speeds held by the limited speed creation information 305 in FIG. 12, the lowest average speed. The average speed V212 becomes equal to 45 km/h by deferring the predicted departure time 701-12 from the preceding station by the time width dt2 from Formula (7) in Embodiment 1 and thus, the content of the predicted departure time 701-12 from the preceding station is changed to the value of Formula (7) and feedback of the traffic prediction information is given to the traffic prediction apparatus 303.

Accordingly, also when the average value is lower than the value of the limited speed creation information 305 in FIG. 12, the limited speed provided to the train can be made a value higher than the limited speed minimum speed information 404.

Accordingly, the traffic control apparatus 301 enables the operation of the train 101 such that the train departs and arrives following the predicted departure time and the predicted arrival time of the traffic prediction information and the average speed is equal to the minimum speed or more.

Embodiment 3

In the present embodiment, a method of reducing the amount of held data of the limited speed creation information 305 used by the limited speed creation apparatus 304 to calculate a limited speed from the average speed will be described using figures.

An overall configuration of the apparatus is shown in FIG. 1. In FIG. 1, working matter and information content of apparatuses excluding the limited speed creation apparatus 304 and the limited speed creation information 305 are all the same as in Embodiment 1.

When calculating the average speed by calculating train performance curves corresponding to the limited speeds 412-1 to 412-3 to create the limited speed creation information 305, values of the limited speeds corresponding to different average speeds may be the same due to rounding errors of calculation or round-off. For example, for the limited speed creation information 305 shown in FIG. 5, limited speeds corresponding to the average speeds 84 km/h, 83 km/h are both 99 km/h. Similarly, limited speeds corresponding to the average speeds 82 to 80 km/h are all 98 km/h.

Here, if the same limited speed corresponds to different average speeds as information held in the limited speed creation information 305, only the lowest value of the average speed and the corresponding limited speed are held. Accordingly, regarding the limited speed 99 km/h corresponding to the aforementioned average speeds 84 km/h, 83 km/h, only the relationship of the average speed 83 km/h and the corresponding limited speed 99 km/h is held. Similarly, regarding the limited speed 98 km/h corresponding to the average speeds 82 to 80 km/h, only the relationship of the average speed 80 km/h and the corresponding limited speed 98 km/h is held. Accordingly, the content of the limited speed creation information 305 shown in FIG. 5 becomes the content shown in FIG. 6 so that the amount of held data can be reduced.

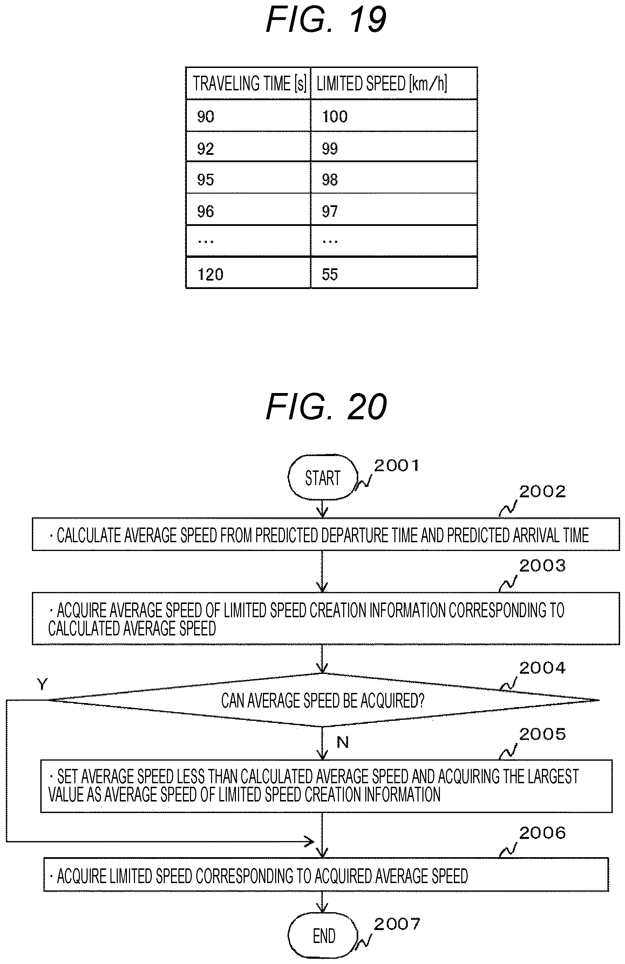

The procedure for calculating a limited speed from the average speed by the limited speed creation apparatus 304 using the limited speed creation information 305 shown in FIG. 6 is shown in FIG. 20. Processing is started with process 2001 and in process 2002, the average speed is calculated from the predicted departure time and the predicted arrival time. In process 2003, the average speed corresponding to the calculated average speed and held in the limited speed creation information 305 is acquired. Then, in process 2004, whether average speed can be acquired is determined. If the calculated average speed is, for example, 84 km/h, the same value is not present in the limited speed creation information 305 shown in FIG. 6 and thus, the condition is not satisfied. If the condition is not satisfied, in process 2005, the average speed less than the calculated average speed and acquiring the largest value is set as the average speed of the limited speed creation information 305 in FIG. 6. When the average speed is 84 km/h, due to process 2005, the average speed is 83 km/h, which is less than 84 km/h and the largest value. Next, in process 2006, the limited speed corresponding to the acquired average speed is acquired. The average speed is 83 km/h and so the corresponding limited speed is 99 km/h from FIG. 6. Then, the processing is finished in process 2007.

The limited speed 99 km/h corresponding to the average speed 84 km/h calculated from the predicted departure time and the predicted arrival time according to the procedure is the same content as the limited speed 99 km/h corresponding to the average speed 84 km/h recorded in the limited speed creation information 305 used in Embodiment 1 and shown in FIG. 5.

Accordingly, the traffic control apparatus 301 enables the operation of the train 101 such that the train departs and arrives following the predicted departure time and the predicted arrival time of the traffic prediction information, the number of trains between stations is equal to the maximum number or less, and the average speed is equal to the minimum speed or more.

Embodiment 4

In the present embodiment, a method of holding the correspondence between the running time between stations and the limited speed regarding the limited speed creation information 305 used by the limited speed creation apparatus 304 to calculate the limited speed will be described using figures.

An overall configuration of the apparatus is shown in FIG. 1. In FIG. 1, working matter and information content of apparatuses excluding the limited speed creation apparatus 304, the limited speed creation information 305, the train departure timing creation apparatus 306, and the train departure timing creation information 307 are all the same as in Embodiment 1.

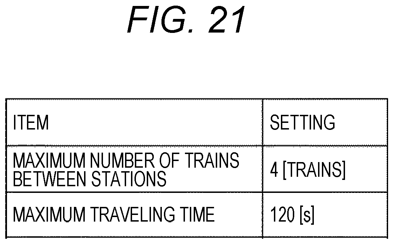

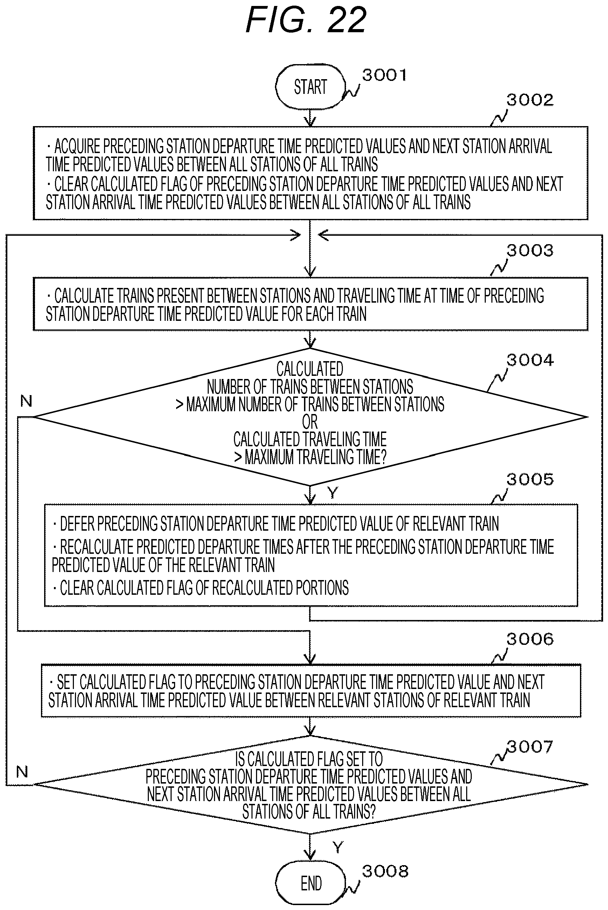

The train departure timing creation apparatus 306 creates departure timing of a train by using the train departure timing creation information 307 for traffic prediction information created by the traffic prediction apparatus 303. An example of the train departure timing creation information 307 is shown in FIG. 21. Here, information of four trains as the maximum value of the number of trains between stations and 120 s as the maximum running time is held. A processing flow of the train departure timing creation apparatus 306 is shown in FIG. 22. Processing is started with process 3001, predicted departure times 701-11 to 701-23 and predicted arrival times 702-21 to 702-33 between each station of all trains are acquired in process 3002, and in process 3003, the number of trains between stations and the running time between stations are determined at the predicted departure times 701-11 to 701-23 at the preceding station between each station of each train.

If the actual departure time 601-21 is later than the planned departure time 501-21 held by the train diagram information 302 by the time width dt, the actual departure time 601-21 is a time earlier than the planned departure time 501-12 of the train 101-2 from the station 503-1 and thus, the numbers of trains between stations including the planned departure time 501-12 are all 0. The running time T between stations can be calculated by Formula (31) below from the predicted departure times 701-11 to 701-23, and the predicted arrival times 702-21 to 702-33.

$$T = \text{running time}$$
$$= (\text{predicted arrival time of next station} - \text{predicted}$$
$$\text{departure time of preceding station}) \quad \text{... Formula (31)}$$

Accordingly, the running time T212 of the train 101-2 between the station 503-1 and the station 503-2 can be calculated by Formula (32) below:

$$T212 = (702\text{-}22 - 701\text{-}12) \quad \text{... Formula (32)}$$

It is assumed here that the calculation result of the running time T212 of the train 101-2 between the station 503-1 and the station 503-2 is 150 s.

Next, in process 3004, whether the calculated number of trains present between stations is larger than the maximum number of trains between stations or whether the calculated running time T is larger than the maximum running time is determined. While the maximum value of the number of trains between stations is four and the maximum running time 120 s from FIG. 21, the calculated number of trains present between stations is 0 and the running time T212 is 150 s and so the condition of process 3004 is satisfied. If the condition of process 3004 is satisfied, the preceding station departure time predicted value of the relevant train is deferred in process 3005. Then, predicted departure times after the preceding station departure time predicted value of the relevant train are recalculated and calculated flags of recalculated portions are cleared.

Here, to make the running time T212 equal to 120 s, the predicted departure time 701-12 from the preceding station is deferred by the time width dt2. Accordingly, 701-12 can be calculated by Formula (33) below:

$$701\text{-}12 = 701\text{-}12 + dt2 = 501\text{-}12 + dt2 \quad \ldots \quad \text{Formula (33)}$$

Accordingly, the running time T212 satisfies the maximum running time 120 s and thus, the average speed is recalculated by returning to process 3003 and the condition of process 3004 is determined to be not satisfied and so process 3006 is entered. In process 3006, a flag to manage a calculated relevant portion is set. Then, in process 3007, similar processing is performed for all trains between all stations and if calculated for all, the processing is finished in process 3008.

As a result of the processing, it is verified that the traffic prediction information is equal to the maximum number of trains between stations shown in the train departure timing creation information 307 or less and the running time is equal to the maximum running time or less.

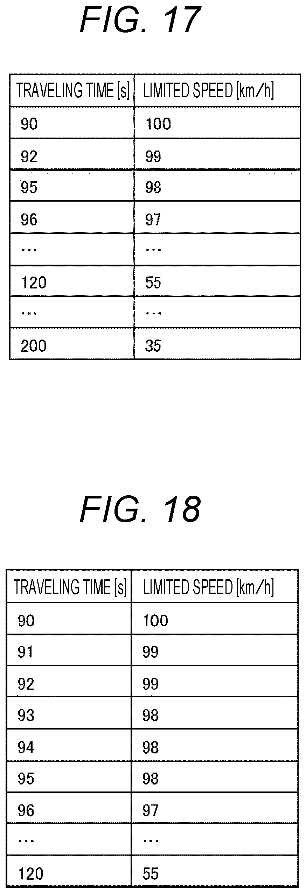

A content example of the limited speed creation information 305 is shown in FIG. 18. The traffic prediction information has the predicted departure times 701-11 to 701-23 and the predicted arrival times 702-21 to 702-33 and thus, the running time T can be calculated by Formula (31). In contrast, the train runs by following the limited speed and thus, the limited speed creation information 305 has a correspondence table between the running time and the limited speed.

A configuration example of the limited speed creation information creation apparatus 401 that creates the limited speed creation information 305 is shown in FIG. 2. The limited speed creation information creation apparatus 401 creates the limited speed creation information 305 using the train performance information 402 and the route information 403.

The content of the train performance information 402 and the route information 403 is the same as in Embodiment 1.

The limited speed creation information creation apparatus 401 sets a limited speed using the train performance information 402 and the route information 403 to create a train performance curve diagram in accordance with the limited speed. An example thereof is shown in FIG. 3. In addition to the method of creating the train performance curve 411 described above, train performance curves following the limited speeds 412-1 to 412-3 are created. For example, the train performance curve 413-2 following the limited speed 412-2 is shown in FIG. 4. By creating the train performance curve 413-2 following the limited speed 412-2, a running time when running by following the limited speed 412-2 can be obtained. By performing similar procedures for all limited speeds, running times corresponding to the limited speeds can be obtained. By repeating the above procedure, the limited speed creation information creation apparatus 401 shown in FIG. 2 can create the limited speed creation information 305 in FIG. 16 as correspondence information between the running time and the limited speed.

The limited speed creation apparatus 304 uses the limited speed creation information 305 in FIG. 16 that has been created to create a limited speed to be provided to the train 101. In the case of Formula (32) in which, for example, the running time T212 of the train 101-2 between the station 503-1 and the station 503-2 is 120 s, the limited speed corresponding to the running time 120 s is 55 km/h from FIG. 16 and thus, 55 km/h is transmitted as the limited speed to the train 101 via the information transmitting apparatus 308 and the information transmission apparatus 201.

The train 101 displays the limited speed 55 km/h that has been received in the information display apparatus 102 and runs following the limited speed.

The running of the train 101 following the limited speed is information created by the limited speed creation apparatus 304 based on traffic prediction information. Because it is verified that the traffic prediction information is equal to the maximum number of trains between stations shown in the train departure timing creation information 307 or less and the running time is equal to the maximum running time or less, the number of trains between stations is equal to the maximum number of trains between stations or less and the running time is equal to the maximum running time or in the running of the train 101 following the limited speed.

Accordingly, the traffic control apparatus 301 enables the operation of the train 101 such that the train departs and arrives following the predicted departure time and the predicted arrival time of the traffic prediction information, the number of trains between stations is equal to the maximum number or less, and the running time is equal to the maximum running time or less.

Embodiment 5

In the present embodiment, a traffic control apparatus having no train departure timing creation information and no train departure timing creation apparatus as a method of holding the correspondence between the running time between stations and the limited speed and providing the limited speed to a train based on the traffic prediction information regarding the limited speed creation information 305 used by the limited speed creation apparatus 304 to calculate a limited speed will be described.

The apparatus configuration is shown in FIG. 14. Each apparatus in FIG. 14 excluding the limited speed creation apparatus 304 and the limited speed creation information 305 performs processing shown in Embodiment 2.

A configuration example of the limited speed creation information creation apparatus 401 that creates the limited speed creation information 305 used by the limited speed creation apparatus 304 is shown in FIG. 15. The limited speed creation information creation apparatus 401 creates the limited speed creation information 305 using the train performance information 402, the route information 403, and limited speed maximum running time information 405. Of the above information, the train performance information 402 and the route information 403 are the same as in Embodiment 1.

The limited speed maximum running time information 405 has, for example, 120 s as the maximum running time shown in FIG. 21. Accordingly, the limited speed creation information creation apparatus 401 creates the limited speed creation information 305 in which the running time is maximally 120 s. An example of the limited speed creation information 305 is shown in FIG. 18. Because the limited speed maximum running time information 405 is 120 s, the limited speed creation information 305 that has been created has no information of the limited speed lower than the limited speed 55 km/h corresponding to the running time 120 s.

The limited speed creation apparatus 304 uses the limited speed creation information 305 in FIG. 18 that has been created to create a limited speed to be provided to the train 101. When, for example, the running time T212 of the train 101-2 between the station 503-1 and the station 503-2 shown in the above Formula (32) is 120 s, the limited speed corresponding to the running time 120 s is 55 km/h from FIG. 18 and thus, the limited speed 55 km/h is transmitted as the limited speed to the train 101 via the information transmitting apparatus 308 and the information transmission apparatus 201.

The processing by the train 101 having received the limited speed 55 km/h and thereafter is the same as in Embodiment 1.

A case in which a limited speed corresponding to a running time longer than the limited speed maximum running time information 405 is determined by the limited speed creation apparatus 304 will be described. When, for example, the running time T212 of the train 101-2 between the station 503-1 and the station 503-2 is 200 s, there is no corresponding value in the running time of the limited speed creation information 305 in FIG. 18 and thus, the limited speed creation apparatus 304 recalculates the predicted station departure time using, among running times held by the limited speed creation information 305 in FIG. 18, the longest running time. The running time T212 becomes equal to 120 s if the predicted departure time 701-12 from the preceding station is deferred by the time width dt2 from Formula (33) in Embodiment 5 and thus, the content of the predicted departure time 701-12 from the preceding station is changed to the value of Formula (33) and feedback of the traffic prediction information is given to the traffic prediction apparatus 303.

Accordingly, also when the running time is longer than the value of the limited speed creation information 305 in FIG. 18, the limited speed to be provided to a train can be made a value higher than the limited speed minimum speed information 404.

Accordingly, the traffic control apparatus 301 enables the operation of the train 101 such that the train departs and arrives following the predicted departure time and the predicted arrival time of the traffic prediction information and the running time is equal to the maximum running time or less.

Embodiment 6

In the present embodiment, a method of holding the correspondence between the running time between stations and the limited speed and reducing the amount of held data regarding the limited speed creation information 305 used by the limited speed creation apparatus 304 to calculate the limited speed will be described using figures.

An overall configuration of the apparatus is shown in FIG. 14. In FIG. 14, working matter and information content of apparatuses excluding the limited speed creation apparatus 304 and the limited speed creation information 305 are all the same as in Embodiment 6. When calculating the running time by calculating train performance curves corresponding to the limited speeds 412-1 to 412-3 to create the limited speed creation information 305, values of the limited speeds corresponding to different running times may be the same due to rounding errors of calculation or round-off. For example, for the limited speed creation information 305 shown in FIG. 16, limited speeds corresponding to the running times 91 s, 92 s are both 99 km/h. Similarly, limited speeds corresponding to the running times 93 to 95 s are all 98 km/h.

Here, if the same limited speed corresponds to different running times as information held in the limited speed creation information 305, only the lowest value of the running time and the corresponding limited speed are held. Accordingly, regarding the limited speed 99 km/h corresponding to the aforementioned running times 91 s, 92 s, only the relationship of the running time 92 s and the corresponding limited speed 99 km/h is held. Similarly, regarding the limited speed 98 km/h corresponding to the running times 93 to 95 s, only the relationship of the running time 95 s and the corresponding limited speed 98 km/h is held. Accordingly, the content of the limited speed creation information 305 shown in FIG. 16 becomes the content shown in FIG. 17 so that the amount of held data can be reduced.

The procedure for calculating a limited speed from the running time by the limited speed creation apparatus 304 using the limited speed creation information 305 shown in FIG. 17 is shown in FIG. 29. Processing is started with process 4001 and in process 4002, the running time is calculated from the predicted departure time and the predicted arrival time. In process 4003, the running time corresponding to the calculated average speed and held in the limited speed creation information 305 is acquired. Then, in process 4004, whether running time can be acquired is determined. If the calculated running time is, for example, 94 s, the same value is not present in the limited speed creation information 305 shown in FIG. 17 and thus, the condition is not satisfied. If the condition is not satisfied, in process 4005, the running time equal to the calculated running time or more and acquiring the smallest value is set as the running time of the limited speed creation information 305 in FIG. 17. When the running time is 94 s, due to process 4005, the running time is 95 s, which is equal to 94 s or more and the smallest value. Next, in process 4006, the limited speed corresponding to the acquired running time is acquired. The running time is 94 s and so the corresponding limited speed is 98 km/h from FIG. 17. Then, the processing is finished in process 4007.

The limited speed 98 km/h corresponding to the running time 94 s calculated from the predicted departure time and the predicted arrival time according to the procedure is the same content as the limited speed 98 km/h corresponding to the running time 94 s recorded in the limited speed creation information 305 used in Embodiment 5 and shown in FIG. 16.

Accordingly, the traffic control apparatus 301 enables the operation of the train 101 such that the train departs and arrives following the predicted departure time and the predicted arrival time of the traffic prediction information, the number of trains between stations is equal to the maximum number or less, and the average speed is equal to the minimum speed or more.

The present invention is not limited to the embodiments described above and includes various modifications. For example, the above embodiments have been described in detail to describe the present invention so as to be understood more easily and all components described above are not necessarily included. Also, a portion of components of a certain embodiment may be replaced by a portion of components of another embodiment or components of a certain embodiment may be added to components of another embodiment. Also, additions, deletions, or substitutions of other components may be made for a portion of components of each embodiment. Each of the above components, functions, processing units, and processing means may partially or wholly be implemented by hardware like, for example, designing an integrated circuit. Also, each of the above components, functions and the like may be implemented by software by a program implementing each function being interpreted and executed by a processor. Information of programs, tables, files and the like implementing each function can be placed in a recording apparatus such as a memory, a hard disk, and SSD (Solid State Drive) or a recording medium such as an IC card, an SD card, and DVD.

Reference Signs List

101, 101-1 to 101-6 Train
102 Information display apparatus
103 Route
104-1 to 104-6 Block
105-1 to 105-4 Section
106-1 to 106-4 Section number
107-1 to 107-5 Position
201 Information transmission apparatus
202 Transmission information
301 Traffic control apparatus
302 Train diagram information
303 Traffic prediction apparatus
304 Limited speed creation apparatus
305 Limited speed creation information
306 Train departure timing creation apparatus
307 Train departure timing creation information
308 Information transmitting apparatus
309 Train arrival/departure control apparatus
401 Limited speed creation information creation apparatus
402 Train performance information
403 Route information
404 Limited speed minimum speed information
405 Limited speed maximum running time information

411 Train performance curve
412-1 to 412-3 Limited speed
413-2 Train performance curve following the limited speed
412-2
501-01 to 501-33 Planned departure time
502-01 to 502-33 Planned arrival time
503-0 to 503-4 Station
504-01 to 504-23 Inter-station distance
505-2 Departure/arrival headway at station-2
601-01 to 601-33 Actual departure time
602-01 to 602-33 Actual arrival time
701-01 to 701-33 Predicted departure time
702-01 to 702-33 Predicted arrival time
1001 to 1008 Processing flow of the train departure timing creation apparatus
2001 to 2007 Processing flow of the limited speed creation apparatus
3001 to 3008 Processing flow of the train departure timing creation apparatus using the maximum running time as the train departure timing creation apparatus
4001 to 4007 Processing flow of the limited speed creation apparatus using the maximum running time as the train departure timing creation apparatus

**Claims**

1. A train operation support system comprising:

   a storage unit that stores a schedule train diagram of trains scheduled in advance, minimum headway as a time interval needed between a preceding train and a subsequent train, and a train performance curve (411) showing a relationship between a limited speed at which each train can run and a train position; and
   an operation processing unit that performs, when a delay of the preceding train [10] arises in an operation of the trains, a process of determining a predicted departure time at which the subsequent train departs from a predetermined station and a predicted arrival time (702-01,...,702-33) at which the subsequent train arrives at a next station after [35] the predetermined station based on the schedule train diagram and the minimum headway, **characterised in that** said unit further performs a process of determining a differential time between the predicted arrival time (702-01,...,702-33) and the predicted departure time and correcting the train performance curve (411) such that a running time becomes the differential time when the subsequent train runs following the corrected [14] train performance curve (411),

   wherein a minimum speed between stations as a minimum value of a speed permissible for running between stations is stored in the storage unit, and
   the operation processing unit changes the predicted departure time when, as a result of an operation prediction of the subsequent train, a calculated average speed falls below the minimal speed between stations.

2. The train operation support system according to claim 1,
   wherein the train performance curve (411) is determined for each train and each running section based on train performance information storing at least acceleration/deceleration performance of each train and route information storing at least gradients and curvatures of the route.

3. The train operation support system according to claim 1,
   wherein the operation processing unit provides information of a start station of a limited speed range intended for the limited speed and an end station of the limited speed range to the subsequent train.

4. The train operation support system according to claim 3,
   wherein the operation processing unit further provides information about the predicted departure time at a departure station or the predicted arrival time (702-01,...,702-33) at an arrival station to the subsequent train.

5. The train operation support system according to claim 1,
   wherein the operation processing unit provides, as the limited speed, one of a differential value from a maximum speed, a differential value from a departure time planned as the predicted departure time, and a differential value from an arrival time planned as the predicted arrival time (702-01,...,702-33) to the subsequent train.

6. The train operation support system according to claim 1,
wherein the operation processing unit periodically provides information according to a predetermined period.

7. The train operation support system according to claim 1,
wherein the operation processing unit calculates an average speed of the train using the predicted departure time and the predicted arrival time (702-01,...,702-33) and calculates the limited speed corresponding to the average speed using correspondence information between the average speed and the limited speed stored in the storage unit.

8. The train operation support system according to claim 1,
wherein the operation processing unit calculates a running time of the train using the predicted departure time and the predicted arrival time (702-01,...,702-33) and calculates the limited speed corresponding to the running time using correspondence information between the running time and the limited speed stored in the storage unit.

9. The train operation support system according to claim 1,
wherein an on-board apparatus provided on the train to display information provided by the operation processing unit and a traffic control apparatus that controls the operation of the train are provided and the operation processing unit and the storage unit are included in the on-board apparatus or the traffic control apparatus.

**Patentansprüche**

1. Zugbetriebsunterstützungssystem, das Folgendes umfasst:

eine Speichereinheit, in der ein Zugfahrplandiagramm von Zügen, die im Voraus geplant worden sind, eine minimale Taktzeit als ein Zeitintervall, das zwischen einem vorausfahrenden Zug und einem nachfolgenden Zug erforderlich ist, und eine Zugleistungskurve (411), die eine Beziehung zwischen einer begrenzten Geschwindigkeit, mit der jeder Zug fahren kann, und einer Zugposition zeigt, gespeichert sind; und
eine Betriebsverarbeitungseinheit, die dann, wenn eine Verzögerung des vorausfahrenden Zuges [10] im Betrieb der Züge auftritt, einen Vorgang des Bestimmens einer vorhergesagten Abfahrtszeit, zu der der nachfolgende Zug von einer vorgegebenen Haltestelle abfährt, und einer vorhergesagten Ankunftszeit (702-01, ..., 702-33), zu der der nachfolgende Zug bei einer nächsten Haltestelle nach [35] der vorgegebenen Haltestelle ankommt, auf der Grundlage des Zugfahrplandiagramms und der minimalen Taktzeit durchführt,
**dadurch gekennzeichnet, dass** die Einheit ferner Folgendes durchführt:

einen Prozess des Bestimmens einer Zeitdifferenz zwischen der vorhergesagten Ankunftszeit (702-01, ..., 702-33) und der vorhergesagten Abfahrtszeit und des Korrigierens der Zugleistungskurve (411) derart, dass eine Fahrtzeit die Zeitdifferenz ist, wenn der nachfolgende Zug nach der korrigierten [14] Zugleistungskurve (411) fährt, wobei
eine Minimalgeschwindigkeit zwischen Haltestellen als ein Minimalwert einer zulässigen Geschwindigkeit zum Fahren zwischen Haltestellen in der Speichereinheit gespeichert ist und
die Betriebsverarbeitungseinheit die vorhergesagte Abfahrtszeit ändert, wenn als ein Ergebnis einer Betriebsvorhersage des nachfolgenden Zuges eine berechnete Durchschnittsgeschwindigkeit unter die Minimalgeschwindigkeit zwischen Haltestellen fällt.

2. Zugbetriebsunterstützungssystem nach Anspruch 1, wobei
die Zugleistungskurve (411) für jeden Zug und jeden Fahrtabschnitt auf der Grundlage von Zugleistungsinformationen, in denen mindestens die Beschleunigungs-/Verzögerungsleistung jedes Zuges gespeichert sind, und Routeninformationen, in denen mindestens Steigungen und Krümmungen der Route gespeichert sind, bestimmt wird.

3. Zugbetriebsunterstützungssystem nach Anspruch 1, wobei
die Betriebsverarbeitungseinheit dem nachfolgenden Zug Informationen über eine Starthaltestelle eines Bereichs mit begrenzter Geschwindigkeit, der für die begrenzte Geschwindigkeit bestimmt ist, und einer Zielhaltestelle des Bereichs mit begrenzter Geschwindigkeit bereitstellt.

4. Zugbetriebsunterstützungssystem nach Anspruch 3, wobei
die Betriebsverarbeitungseinheit dem nachfolgenden Zug ferner Informationen über die vorhergesagte Abfahrtszeit bei einer Abfahrtshaltestelle oder die vorhergesagte Ankunftszeit (702-01, ..., 702-33) bei einer Ankunftshaltestelle bereitstellt.

5. Zugbetriebsunterstützungssystem nach Anspruch 1, wobei
die Betriebsverarbeitungseinheit dem nachfolgenden Zug als die begrenzte Geschwindigkeit einen Differenzwert von einer maximalen Geschwindigkeit, einen Differenzwert von einer Abfahrtszeit, die als die vorhergesagte Abfahrtszeit geplant wurde, oder einen Differenzwert von einer Ankunftszeit, die als die vorhergesagte Ankunftszeit (702-01, ..., 702-33) geplant wurde, bereitstellt.

6. Zugbetriebsunterstützungssystem nach Anspruch 1, wobei
die Betriebsverarbeitungseinheit regelmäßig gemäß einer vorgegebenen Frist Informationen bereitstellt.

7. Zugbetriebsunterstützungssystem nach Anspruch 1, wobei
die Betriebsverarbeitungseinheit unter Verwendung der vorhergesagten Abfahrtszeit und der vorhergesagten Ankunftszeit (702-01, ..., 702-33) eine Durchschnittsgeschwindigkeit des Zuges berechnet und unter Verwendung von Entsprechungsinformationen zwischen der Durchschnittsgeschwindigkeit und der begrenzten Geschwindigkeit, die in der Speichereinheit gespeichert ist, die begrenzte Geschwindigkeit, die der Durchschnittsgeschwindigkeit entspricht, berechnet.

8. Zugbetriebsunterstützungssystem nach Anspruch 1, wobei
die Betriebsverarbeitungseinheit unter Verwendung der vorhergesagten Abfahrtszeit und der vorhergesagten Ankunftszeit (702-01, ..., 702-33) eine Fahrtzeit des Zuges berechnet und unter Verwendung von Entsprechungsinformationen zwischen der Fahrtzeit und der begrenzten Geschwindigkeit, die in der Speichereinheit gespeichert ist, die begrenzte Geschwindigkeit, die der Fahrtzeit entspricht, berechnet.

9. Zugbetriebsunterstützungssystem nach Anspruch 1, wobei
wobei eine fahrzeuginterne Vorrichtung, die im Zug vorgesehen ist, um Informationen, die durch die Betriebsverarbeitungseinheit bereitgestellt werden, anzuzeigen, und eine Verkehrssteuervorrichtung, die den Betrieb des Zuges steuert, bereitgestellt sind und die Betriebsverarbeitungseinheit und die Speichereinheit in der fahrzeuginternen Vorrichtung oder der Verkehrssteuervorrichtung enthalten sind.


**Revendications**

1. Système d'assistance au fonctionnement de trains, comprenant :

une unité de stockage qui stocke un diagramme de programmation d'un train ou de trains programmé(s) à l'avance, un temps d'avance minimum à titre d'intervalle temporel nécessaire entre un train précédent et un train ultérieur, et une courbe de performance de train (411) présentant une relation entre une vitesse limitée à laquelle chaque train peut circuler et une position du train ; et
une unité de traitement de fonctionnement qui exécute, lorsqu'un retard du train précédent [10] survient dans le fonctionnement des trains, un processus consistant à déterminer un temps de départ prédit auxquels le train ultérieur part d'une station prédéterminée et un temps d'arrivée prédit (702-01, ..., 702-33) auquel le train ultérieur arrive à une station suivante après [35] la station prédéterminée sur la base du diagramme de programmation de train et du temps d'avance minimum,
**caractérisé en ce que** ladite unité exécute en outre un processus consistant à déterminer un temps différentiel entre le temps d'arrivée prédit (702-01, ..., 702-33) et le temps de départ prédit et à corriger la courbe de performance de train (400) de telle façon qu'un temps de circulation devient le temps différentiel quand le train ultérieur circule en suivant la courbe de performance de train (411) corrigée [14],
dans lequel une vitesse minimum entre stations, à titre de valeur minimum d'une vitesse permissible pour circuler entre stations, est stockée dans l'unité de stockage, et
l'unité de traitement de fonctionnement change le temps de départ prédit lorsque, en résultat d'une prédiction de fonctionnement du train ultérieur, une vitesse moyenne calculée tombe au-dessous de la vitesse minimum entre stations.

2. Système d'assistance au fonctionnement de train selon la revendication 1, dans lequel la courbe de performance de train (411) est déterminée pour chaque train et chaque section de circulation sur la base d'une information de performance de train qui stocke au moins les performances d'accélération/décélération de chaque train et d'une information d'itinéraire stockant au moins les gradients et les courbures de l'itinéraire.

3. Système d'assistance au fonctionnement de train selon la revendication 1, dans lequel l'unité de traitement de fonctionnement fournit au train ultérieur des informations d'une station de départ d'une plage de vitesse limitée prévue pour la vitesse limitée et d'une station finale de la plage de vitesse limitée.

4. Système d'assistance au fonctionnement de train selon la revendication 3, dans lequel l'unité de traitement de fonctionnement fournit en outre au train ultérieur une information concernant le temps de départ prédit à une station de départ ou le temps d'arrivée prédit (702-01, ..., 702-33) à une station d'arrivée.

5. Système d'assistance au fonctionnement de train selon la revendication 1, dans lequel l'unité de traitement de fonctionnement fournit au train ultérieur, à titre de vitesse limitée, soit une valeur différentielle à partir d'une vitesse maximum, soit une valeur différentielle à partir d'un temps de départ planifié à titre de temps de départ prédit, soit encore une valeur différentielle à partir d'un temps d'arrivée planifié à titre de temps d'arrivée prédit (702-01, ..., 702-33).

6. Système d'assistance au fonctionnement de train selon la revendication 1, dans lequel l'unité de traitement de fonctionnement fournit périodiquement des informations en accord avec une période prédéterminée.

7. Système d'assistance au fonctionnement de train selon la revendication 1, dans lequel l'unité de traitement de fonctionnement calcule une vitesse moyenne du train en utilisant le temps de départ prédit et le temps d'arrivée prédit (702-01, ..., 702-33) et calcule la vitesse limitée correspondant à la vitesse moyenne en utilisant une information de correspondance entre la vitesse moyenne et la vitesse limitée stockée dans l'unité de stockage.

8. Système d'assistance au fonctionnement de train selon la revendication 1, dans lequel l'unité de traitement de fonctionnement calcule un temps de circulation du train en utilisant le temps de départ prédit et le temps d'arrivée prédit (702-01, ..., 702-33) et calcule la vitesse limitée correspondant au temps de circulation en utilisant une information de correspondance entre le temps de circulation et la vitesse limitée stockée dans l'unité de stockage.

9. Système d'assistance au fonctionnement de train selon la revendication 1, dans lequel un appareil embarqué à bord prévu sur le train afin d'afficher des informations fournies par l'unité de traitement de fonctionnement, et un appareil de commande de trafic qui commande le fonctionnement du train sont prévus et l'unité de traitement de fonctionnement et l'unité de stockage sont incluses dans l'appareil embarqué à bord ou dans l'appareil de commande de trafic.

# FIG. 1

# FIG. 2

# FIG. 3

SPEED

412—1
412—2
412—3
411

POSITION

# FIG. 4

SPEED

412—1
412—2
412—3
413—2

POSITION

# FIG. 5

| AVERAGE SPEED [km/h] | LIMITED SPEED [km/h] |
|---|---|
| 85 | 100 |
| 84 | 99 |
| 83 | 99 |
| 82 | 98 |
| 81 | 98 |
| 80 | 98 |
| 79 | 97 |
| ... | ... |
| 45 | 55 |
| ... | ... |
| 25 | 35 |

# FIG. 6

| AVERAGE SPEED [km/h] | LIMITED SPEED [km/h] |
|---|---|
| 85 | 100 |
| 83 | 99 |
| 80 | 98 |
| 79 | 97 |
| ... | ... |
| 45 | 55 |
| ... | ... |
| 25 | 35 |

# FIG. 7

| ITEM | SETTING |
|---|---|
| MAXIMUM NUMBER OF TRAINS BETWEEN STATIONS | 4 [TRAINS] |
| MINIMUM SPEED | 45 [km/h] |

# FIG. 8

```
                    ( START )  1001
                        │
                        ▼
```

**1002**
· ACQUIRE PRECEDING STATION DEPARTURE TIME PREDICTED VALUES AND NEXT STATION ARRIVAL TIME PREDICTED VALUES BETWEEN ALL STATIONS OF ALL TRAINS
· CLEAR CALCULATED FLAG OF PRECEDING STATION DEPARTURE TIME PREDICTED VALUES AND NEXT STATION ARRIVAL TIME PREDICTED VALUES BETWEEN ALL STATIONS OF ALL TRAINS

**1003**
· CALCULATE TRAINS PRESENT BETWEEN STATIONS AND AVERAGE SPEED AT TIME OF PRECEDING STATION DEPARTURE TIME PREDICTED VALUE FOR EACH TRAIN

**1004**
CALCULATED NUMBER OF TRAINS BETWEEN STATIONS > MAXIMUM NUMBER OF TRAINS BETWEEN STATIONS OR CALCULATED AVERAGE SPEED < MINIMUM SPEED?

N ─────

Y

**1005**
· DEFER PRECEDING STATION DEPARTURE TIME PREDICTED VALUE OF RELEVANT TRAIN
· RECALCULATE PREDICTED DEPARTURE TIMES AFTER THE PRECEDING STATION DEPARTURE TIME PREDICTED VALUE OF THE RELEVANT TRAIN
· CLEAR CALCULATED FLAG OF RECALCULATED PORTIONS

**1006**
· SET CALCULATED FLAG TO PRECEDING STATION DEPARTURE TIME PREDICTED VALUE AND NEXT STATION ARRIVAL TIME PREDICTED VALUE BETWEEN RELEVANT STATIONS OF RELEVANT TRAIN

**1007**
IS CALCULATED FLAG SET TO PRECEDING STATION DEPARTURE TIME PREDICTED VALUES AND NEXT STATION ARRIVAL TIME PREDICTED VALUES BETWEEN ALL STATIONS OF ALL TRAINS?

N ─────

Y

( END )  **1008**

# FIG. 9

# FIG. 10

| TRAIN | STATION | ACTUAL ARRIVAL TIME | ACTUAL DEPARTURE TIME |
|-------|---------|---------------------|------------------------|
| 101—1 | 503—1 | — | 601—11 |
|       | 503—2 | 602—21 | 601—21 |
|       | 503—3 | 602—31 | — |
| 101—2 | 503—1 | — | 601—12 |
|       | 503—2 | 602—22 | 601—22 |
|       | 503—3 | 602—32 | — |
| 101—3 | 503—1 | — | 601—13 |
|       | 503—2 | 602—23 | 601—23 |
|       | 503—3 | 602—33 | — |

# FIG. 11

| TRAIN | STATION | PREDICTED ARRIVAL TIME | PREDICTED DEPARTURE TIME |
|-------|---------|------------------------|---------------------------|
| 101—1 | 503—1 | — | 701—11 |
|       | 503—2 | 702—21 | 701—21 |
|       | 503—3 | 702—31 | — |
| 101—2 | 503—1 | — | 701—12 |
|       | 503—2 | 702—22 | 701—22 |
|       | 503—3 | 702—32 | — |
| 101—3 | 503—1 | — | 701—13 |
|       | 503—2 | 702—23 | 701—23 |
|       | 503—3 | 702—33 | — |

# FIG. 12

| AVERAGE SPEED [km/h] | LIMITED SPEED [km/h] |
|---|---|
| 85 | 100 |
| 84 | 99 |
| 83 | 99 |
| 82 | 98 |
| 81 | 98 |
| 80 | 98 |
| 79 | 97 |
| ... | ... |
| 45 | 55 |

# FIG. 13

| AVERAGE SPEED [km/h] | LIMITED SPEED [km/h] |
|---|---|
| 85 | 100 |
| 83 | 99 |
| 80 | 98 |
| 79 | 97 |
| ... | ... |
| 45 | 55 |

# FIG. 14

## FIG. 15

## FIG. 16

| TRAVELING TIME [s] | LIMITED SPEED [km/h] |
|---|---|
| 90 | 100 |
| 91 | 99 |
| 92 | 99 |
| 93 | 98 |
| 94 | 98 |
| 95 | 98 |
| 96 | 97 |
| ... | ... |
| 120 | 55 |
| ... | ... |
| 200 | 35 |

## FIG. 17

| TRAVELING TIME [s] | LIMITED SPEED [km/h] |
|---|---|
| 90 | 100 |
| 92 | 99 |
| 95 | 98 |
| 96 | 97 |
| ... | ... |
| 120 | 55 |
| ... | ... |
| 200 | 35 |

## FIG. 18

| TRAVELING TIME [s] | LIMITED SPEED [km/h] |
|---|---|
| 90 | 100 |
| 91 | 99 |
| 92 | 99 |
| 93 | 98 |
| 94 | 98 |
| 95 | 98 |
| 96 | 97 |
| ... | ... |
| 120 | 55 |

# FIG. 19

| TRAVELING TIME [s] | LIMITED SPEED [km/h] |
|---|---|
| 90 | 100 |
| 92 | 99 |
| 95 | 98 |
| 96 | 97 |
| ... | ... |
| 120 | 55 |

# FIG. 20

START 2001

↓

· CALCULATE AVERAGE SPEED FROM PREDICTED DEPARTURE TIME AND PREDICTED ARRIVAL TIME 2002

↓

· ACQUIRE AVERAGE SPEED OF LIMITED SPEED CREATION INFORMATION CORRESPONDING TO CALCULATED AVERAGE SPEED 2003

↓

CAN AVERAGE SPEED BE ACQUIRED? 2004

Y →

N ↓

· SET AVERAGE SPEED LESS THAN CALCULATED AVERAGE SPEED AND ACQUIRING THE LARGEST VALUE AS AVERAGE SPEED OF LIMITED SPEED CREATION INFORMATION 2005

↓

· ACQUIRE LIMITED SPEED CORRESPONDING TO ACQUIRED AVERAGE SPEED 2006

↓

END 2007

# FIG. 21

| ITEM | SETTING |
|---|---|
| MAXIMUM NUMBER OF TRAINS BETWEEN STATIONS | 4 [TRAINS] |
| MAXIMUM TRAVELING TIME | 120 [s] |

# FIG. 22

START  $\sim$ 3001

3002
- ACQUIRE PRECEDING STATION DEPARTURE TIME PREDICTED VALUES AND NEXT STATION ARRIVAL TIME PREDICTED VALUES BETWEEN ALL STATIONS OF ALL TRAINS
- CLEAR CALCULATED FLAG OF PRECEDING STATION DEPARTURE TIME PREDICTED VALUES AND NEXT STATION ARRIVAL TIME PREDICTED VALUES BETWEEN ALL STATIONS OF ALL TRAINS

3003
- CALCULATE TRAINS PRESENT BETWEEN STATIONS AND TRAVELING TIME AT TIME OF PRECEDING STATION DEPARTURE TIME PREDICTED VALUE FOR EACH TRAIN

3004
CALCULATED NUMBER OF TRAINS BETWEEN STATIONS > MAXIMUM NUMBER OF TRAINS BETWEEN STATIONS OR CALCULATED TRAVELING TIME > MAXIMUM TRAVELING TIME?

N

Y

3005
- DEFER PRECEDING STATION DEPARTURE TIME PREDICTED VALUE OF RELEVANT TRAIN
- RECALCULATE PREDICTED DEPARTURE TIMES AFTER THE PRECEDING STATION DEPARTURE TIME PREDICTED VALUE OF THE RELEVANT TRAIN
- CLEAR CALCULATED FLAG OF RECALCULATED PORTIONS

3006
- SET CALCULATED FLAG TO PRECEDING STATION DEPARTURE TIME PREDICTED VALUE AND NEXT STATION ARRIVAL TIME PREDICTED VALUE BETWEEN RELEVANT STATIONS OF RELEVANT TRAIN

3007
IS CALCULATED FLAG SET TO PRECEDING STATION DEPARTURE TIME PREDICTED VALUES AND NEXT STATION ARRIVAL TIME PREDICTED VALUES BETWEEN ALL STATIONS OF ALL TRAINS?

N

Y

END  $\sim$ 3008

# FIG. 23

102

LIMITED SPEED   55km/h

# FIG. 24

102

411
412—2
413—2

SPEED

POSITION

## FIG. 25

102

LIMITED SPEED   55km/h


NEXT STATION TARGET ARRIVAL TIME   10:17:30

## FIG. 26

102

STATION DEPARTURE TIME   10:15:30


LIMITED SPEED TILL NEXT STATION   55km/h

# FIG. 27

STATION DEPARTURE TIME   10:15:30

LIMITED SPEED TILL NEXT STATION   55km/h

NEXT STATION TARGET ARRIVAL TIME   10:17:30

# FIG. 28

## FIG. 29

START /4001

· CALCULATE TRAVELING TIME FROM PREDICTED DEPARTURE TIME AND PREDICTED ARRIVAL TIME /4002

· ACQUIRE TRAVELING TIME OF LIMITED SPEED CREATION INFORMATION CORRESPONDING TO CALCULATED TRAVELING TIME /4003

Y — CAN TRAVELING TIME BE ACQUIRED? /4004

N /4005

· SET TRAVELING TIME EQUAL TO CALCULATED TRAVELING TIME OR MORE AND ACQUIRING THE SMALLEST VALUE AS TRAVELING TIME OF LIMITED SPEED CREATION INFORMATION

· ACQUIRE LIMITED SPEED CORRESPONDING TO ACQUIRED TRAVELING TIME /4006

END /4007

## FIG. 30

101-1  101-2  101-3  101-4  101-5  101-6

103

101-1  101-2  101-3  101-4  101-5  101-6

104-1  104-2  104-3  104-4  104-5  104-6

# FIG. 31

101-1  101-2  101-3

103

101-1  101-2  101-3

104-1  104-2  104-3  104-4  104-5  104-6

# FIG. 32

101

103

101

105-1  105-2  105-3  105-4

106-1  106-2  106-3  106-4

# FIG. 33

# FIG. 34

| | TRANSMISSION INFORMATION EXAMPLE | | | | | | | | TRANSMISSION TIMING |
|---|---|---|---|---|---|---|---|---|---|
| | TRAIN NUMBER | LIMITED SPEED | LIMITED SPEED START STATION | LIMITED SPEED END STATION | DEPARTURE TIMING INFORMATION | | | | |
| | | | | | DEPARTURE STATION | PREDICTED DEPARTURE TIME | ARRIVAL STATION | PREDICTED ARRIVAL TIME | |
| FORMULA (8) | 11M | 55k m/h | ABC STATION | DEF STATION | ABC STATION | 13:50:00 | DEF STATION | 13:54:30 | AFTER 13:45:00 |
| FORMULA (9) | 11M | — | — | — | ABC STATION | 13:50:00 | — | — | BEFORE 13:50:00 |
| FORMULA (10) | 11M | 55k m/h | ABC STATION | DEF STATION | ABC STATION | 13:50:00 | — | — | BEFORE 13:50:00 |
| FORMULA (11) | 11M | 55k m/h | ABC STATION | DEF STATION | — | — | — | — | AFTER 13:50:00 BEFORE 13:54:30 |
| FORMULA (12) | 11M | 55k m/h | ABC STATION | DEF STATION | — | — | DEF STATION | 13:54:30 | AFTER 13:50:00 AND BEFORE 13:54:30 |
| FORMULA (13) | 11M | — | — | — | — | — | DEF STATION | 13:54:30 | AFTER 13:54:30 |

## FIG. 35

| | TRANSMISSION INFORMATION EXAMPLE | | | | | | | |
|---|---|---|---|---|---|---|---|---|
| | TRAIN NUMBER | NO LIMITED TRAIN FLAG | LIMITED SPEED | LIMITED SPEED START STATION | LIMITED SPEED END STATION | LIMITED SPEED SECTION NUMBER | LIMITED SPEED START POSITION | LIMITED SPEED END POSITION |
| FORMULA (14) | 11M | – | 55km/h | – | – | 456 | – | – |
| FORMULA (15) | 11M | – | 55km/h | – | – | – | 78.9km | 89.0km |
| FORMULA (16) | – | ○ | 55km/h | ABC STATION | DEF STATION | – | – | – |
| FORMULA (17) | – | ○ | 55km/h | – | – | 456 | – | – |
| FORMULA (18) | – | ○ | 55km/h | – | – | – | 78.9km | 89.0km |

## FIG. 36

| | TRANSMISSION INFORMATION EXAMPLE | | | | | |
|---|---|---|---|---|---|---|
| | TRAIN NUMBER | NUMBER OF LIMITED SPEED SECTIONS | SECTION 1 | | SECTION 2 | |
| | | | LIMITED SPEED | LIMITED SPEED SECTION NUMBER | LIMITED SPEED | LIMITED SPEED SECTION NUMBER |
| FORMULA (14) | 11M | 2 | 55km/h | 456 | 45km/h | 789 |

**EP 3 138 755 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11255126 A
- JP 2010036722 A
- US 2012197466 A1, Yoshimoto